# EUROPEAN PATENT APPLICATION

(11) **EP 4 734 236 A1**
(43) Date of publication of application: **29.04.2026**
(21) Application number: 25170095.1
(22) Date of filing: 11.04.2025
(51) Int. Cl.: H01M 50/103, H01M 50/15, H01M 50/176, H01M 50/533, H01M 50/536, H01M 50/553, H01M 50/566, H01M 50/55, H01M 50/209

(54) **SECONDARY BATTERY, METHOD OF MANUFACTURING SECONDARY BATTERY, AND BATTERY PACK**

(30) Priority: 24.10.2024 KR 20240146803
(71) Applicant: SAMSUNG SDI CO., LTD., Yongin-si, Gyeonggi-do 17084 (KR)
(72) Inventor: KIM, TAE JUN, 16678 Suwon-si, Gyeonggi-do (KR); KIM, HYUN, 16678 Suwon-si, Gyeonggi-do (KR)
(74) Representative: Gulde & Partner

(57) **Abstract**

A secondary battery (2), including a case (100), an electrode assembly (200) inside the case (100), a cap assembly (400) sealing the case (100), the cap assembly (400) including a first terminal (420) and a second terminal (430), a first tab member (301) extending in a first direction from the electrode assembly (200), a first sub plate (500) between the electrode assembly (200) and the case (100), the first sub plate (500) being connected to the first tab member (301), a first terminal plate (600) connected to the first terminal (420) and the first sub plate (500), and a first direct connecting portion (650) in the first sub plate (500) to allow the first terminal plate (600) and the first tab member (301) to be directly welded together.

## Description

### BACKGROUND

### 1. Field

The present disclosure relates to a secondary battery, a method of manufacturing the secondary battery, and a battery pack.

### 2. Description of the Related Art

In general, with the rapid spread of electronic devices that use batteries, such as portable phones, laptop computers, and electric vehicles, the demand for high energy density and high-capacity secondary batteries is rapidly increasing. Accordingly, research and development to improve the performance of lithium secondary batteries is actively being conducted.

A lithium secondary battery is a battery that includes a positive electrode and a negative electrode including active materials capable of intercalation and deintercalation of lithium ions, and an electrolyte, and produces electrical energy through oxidation and reduction reactions when lithium ions are intercalated/deintercalated into/from the positive electrode and negative electrode.

The above information disclosed in this Background section is provided for enhancement of understanding of the background of the present disclosure, and, therefore, it may contain information that does not constitute related (or prior) art.

### SUMMARY

The invention is defined by the appended claims. The description that follows is subjected to this limitation. Any disclosure lying outside the scope of said claims is only intended for illustrative as well as comparative purposes.

Embodiments include a secondary battery, including a case, an electrode assembly inside the case, a cap assembly sealing the case, the cap assembly including a first terminal and a second terminal, a first tab member extending in a first direction from the electrode assembly, a first sub plate between the electrode assembly and the case, the first sub plate being connected to the first tab member, a first terminal plate connected to the first terminal and the first sub plate, and a first direct connecting portion in the first sub plate to allow the first terminal plate and the first tab member to be directly welded together.

In other words, the first direct connecting portion in the first sub plate may be configured to allow the first terminal plate and the first tab member to be directly welded together. The first direct connecting portion may be an element or a structure that allows the first terminal plate and the first tab member to be connected together, the connection comprising a welded joint.

The first direction may extend from the electrode assembly toward the first sub-plate. A second direction may extend perpendicular to the first direction. A third direction may extend perpendicular to both the first and second directions.

The first tab member may extend from the electrode assembly towards the first sub plate.

The first terminal plate may be partially disposed between the first sub plate and the first tab member.

The first tab member may include a first end surface intersecting the first direction, and the first sub plate may be in contact with the first end surface. In other words, the first end surface may extend in a direction that intersects the first direction. In other words, the first end surface may extend in a direction perpendicular to the first direction. This direction may comprise the first and/or the third direction. The first end place may face the first sub plate. The first sub plate may contact the first end surface. A part of the first sub plate may be in contact with a part of the first end surface.

The first sub plate may be parallel to the first end surface.

An area of the first sub plate may be larger than an area of the first end surface.

The area of the first sub plate may be 5%, 10 % or 15% larger than the area of the first end surface.

An area of the first sub plate may be larger than an area of the first end surface, so that the first sub plate or the part of the first sub plate overlaps the first end surface or the part of the first end surface in contact with the first sub plate or part of the first sub plate.

The secondary battery may further include a first sub welding line on the first sub plate and the first tab member, the first sub welding line connecting the first sub plate and the first tab member. In other words, the first sub welding line may be a connecting element establishing the connection between the first sub plate and the first tab member. The first sub welding line may be disposed on the first sub plate and on the first tab member. The first sub welding line may be integrally formed with both the first sub plate and the first tab member resulting in the connection of both elements.

The secondary battery may further include a plurality of first sub welding lines on the first sub plate and the first tab member. The first sub welding lines may be disposed along an opposite direction of a third direction and/or may be spaced apart equidistantly. In other words, the plurality of first sub welding lines may extend in a direction (e. g. the third direction) intersecting the first direction.

The first tab member may include a plurality of first tabs in a second direction intersecting the first direction, and the first sub welding line may be parallel to the second direction. In other words, the first tabs may be disposed along a direction (e. g. the second direction) that intersects the first direction. In other words, the plurality of first tabs may extend in a direction perpendicular to the first direction. This direction may be the second direction. The first end surface may be formed by the plurality of first tabs. The first tabs may each include a front surface facing the first sub plate. A surface formed by all the front surfaces of the first tabs, for example a contiguous surface, may form the first end surface.

The first tab member may include an upper tab and a lower tab, and the first direct connecting portion may correspond to the upper tab. Further, each first tab may include the upper tab and the lower tab. In other words, the first direct connecting portion may ba assigned to the upper tab. In other words, the first direct connecting portion may be disposed opposite to and/or disposed to face the upper tab.

The upper tab may have a longer length in a third direction than the lower tab.

The length of the upper tab in the third direction may be 5%, 10%, 15% or 20% longer than the length of the lower tab in the third direction.

The secondary battery may further include a first connecting portion bending (or in other words bent) toward the first sub plate of the first terminal plate, and a first welding line connecting the first sub plate and the first connecting portion. In other words, the first terminal plate may include a first connecting portion which is bent from a base body of the first terminal plate in the direction of the first sub plate. The first connecting portion may be bent such that it is disposed between the first tab member and the first sub plate. In other words, the first welding line may be a connecting element establishing a connection between the first sub plate and the first connecting portion. The first welding line may be disposed on the first sub plate and on the first connecting portion. The first welding line may be integrally formed with both the first sub plate and the first connecting portion resulting in the connection of both elements.

A first connecting groove portion in which the first connecting portion may be seated may be formed in the first sub plate. In other words, the first sub plate may include a first connecting groove portion in which the first connecting portion may be seated. The first connecting groove portion may accommodate the first connecting portion. The first connecting groove portion may have a certain length and thickness to accommodate the first connecting portion. The first sub plate may include a bent portion extending at least partially in the first direction and forming a flange, so that the first connecting groove portion is formed. In other words, the first connecting groove portion may be further away from the first tab member than the remaining part of the first sub plate.

An upper end of the upper tab and the first connecting groove portion may be spaced apart such that a gap or cavity is formed between them for accommodating the first connecting portion.

An upper end portion of the upper tab may contact the first connecting portion, and the first direct connecting portion may include a through hole in an upper end of the first sub plate, the first connecting portion being exposed by the through hole. In other words, the first sub plate may include a through hole formed in an upper end of the first sub plate and being part of the first direct connecting portion. The through hole may partially or fully overlap with the first connecting portion or a part of the first connecting portion, such that a surface of the first connecting portion is exposed or uncovered (not covered) by the first sub plate or the first direct connecting portion.

The secondary battery may further include a first reinforcement welding line connecting the first sub plate and the first connecting portion. In other words, the first reinforcement welding line may be a connecting element establishing a connection between the first sub plate and the first connecting portion. The first reinforcement welding line may be disposed on the first sub plate and on the first connecting portion. The first reinforcement welding line may be integrally formed with both the first sub plate and the first connecting portion resulting in the connection of both elements.

The secondary battery may further include a first reinforcement welding line on the upper tab and the first connecting portion, the first reinforcement welding line connecting the upper tab and the first connecting portion. In other words, the first reinforcement welding line may be a connecting element establishing a connection between the upper tab and the first connecting portion. The first reinforcement welding line may be disposed on the upper tab and the first connecting portion. The first reinforcement welding line may be integrally formed with both the upper tab and the first connecting portion resulting in the connection of both elements.

The first direct connecting portion may be a straight line extending in a second direction in the first sub plate, and the first reinforcement welding line may be along the first direct connecting portion.

The second direction may extend perpendicular to the first and/or the third direction.

The first direct connecting portion may have a shape of a straight line extending in the second direction in the first sub plate, and the first reinforcement welding line may be formed along the first direct connecting portion.

The first direct connecting portion may have a zigzag shape extending in a second direction in the first sub plate, and the first reinforcement welding line may be along the first direct connecting portion. In other words, the first direct connecting portion may be formed in a zigzag shape.

The first direct connecting portion may have a wavy shape extending in a second direction in the first sub plate, and the first reinforcement welding line may be along the first direct connecting portion. In other words, the first direct connecting portion may be formed in a wavy shape.

The first reinforcement welding line may be formed in a zigzag shape or the first reinforcement welding line may be formed in a wavy shape. The first reinforcement welding line may be formed along the zigzag shape or the wavy shape of the first direct connecting portion.

The first direct connecting portion may have a sawtooth shape extending in a second direction in the first sub plate, and the first reinforcement welding line may be along the first direct connecting portion. In other words, the first direct connecting portion may be formed in a sawtooth shape. The first reinforcement welding line may be formed along the sawtooth shape of the first direct connecting portion.

The secondary battery may further include a second tab member extending from the electrode assembly, the second tab member being spaced apart from the first tab member, a second sub plate between the electrode assembly and the case, the second sub plate being connected to the second tab member, a second terminal plate connected to the second terminal and the second sub plate, and a second direct connecting portion in the second sub plate to allow the second terminal plate and the second tab member to be directly welded together.

In other words, the second direct connecting portion in the second sub plate may be configured to allow the second terminal plate and the second tab member to be directly welded together. The second direct connecting portion may be an element or a structure that allows the second terminal plate and the second tab member to be connected together, the connection comprising a welded joint.

The first sub plate may include a first center plate and a first extension plate. The first center plate may form a central portion of an exterior of the first sub plate. The first center plate may be disposed between the electrode assembly and the case. The first center plate may be disposed to face a side surface of the electrode assembly. Both end portions of the first center plate may extend a predetermined distance toward the electrode assembly. The first extension plate may extend from the first center plate and may be in contact with the first tab member. The first extension plate according to the present embodiment may be formed to have a substantially flat plate shape. The first extension plate may extend from the first center plate in a direction parallel to the third direction. The first extension plates may be provided in a pair. The pair of first extension plates may extend from both end portions of the first center plate in each of the third direction and an opposite direction of the third direction. The pair of first extension plates may individually be in contact with different first tab members. That is, each of the upper tab and the lower tab of the first tab member may be in contact with the first extension plate.

Embodiments include a method of manufacturing a secondary battery, including forming a first tab member, connecting a first sub plate and a first terminal plate, forming a first sub welding line on the first tab member and the first sub plate, and forming a first reinforcement welding line on the first terminal plate and the first tab member through a first direct connecting portion in the first sub plate. The features and advantages described in connection with the secondary battery may be combined in a similar way with the method and its advantages achieved.

The first tab member may include an upper tab and a lower tab, and the first direct connecting portion may correspond to the upper tab.

The upper tab may have a longer length in a third direction than the lower tab.

The first terminal plate may include a first connecting portion bending toward the first sub plate, the method further including forming a first welding line connecting the first sub plate and the first connecting portion.

Embodiments include a battery pack, including a housing, and a plurality of secondary batteries inside the housing, wherein each of the plurality of secondary batteries includes a case, an electrode assembly inside the case, a cap assembly sealing the case, the cap assembly including a first terminal and a second terminal, a first tab member extending in a first direction from the electrode assembly, a first sub plate between the electrode assembly and the case, the first sub plate being connected to the first tab member, a first terminal plate connected to the first terminal and the first sub plate, and a first direct connecting portion in the first sub plate to allow the first terminal plate and the first tab member to be directly welded together.

In other words, the battery pack may include the secondary battery according to an embodiment. The features and advantages described in connection with the secondary battery may be combined in a similar way with the battery pack and its advantages achieved.

These and other aspects and features of the present disclosure will be described in or will be apparent from the following description of some embodiments of the present disclosure.

### BRIEF DESCRIPTION OF THE DRAWINGS

Features will become apparent to those of ordinary skill in the art by describing in detail exemplary embodiments with reference to the attached drawings, in which:
FIG. 1 is a perspective view schematically illustrating a configuration of a battery pack according to one or more embodiments of the present disclosure;
FIG. 2 is a perspective view schematically illustrating a configuration of a secondary battery according to one or more embodiments of the present disclosure;
FIG. 3 is an exploded view schematically illustrating a configuration of a secondary battery according to one or more embodiments of the present disclosure;
FIG. 4 is a cross-sectional view schematically illustrating a configuration of a secondary battery according to one or more embodiments of the present disclosure;
FIG. 5 is a diagram schematically illustrating a configuration of an electrode assembly according to one or more embodiments of the present disclosure;
FIG. 6 is an exploded view schematically illustrating a configuration of a first sub plate and a first terminal plate according to one or more embodiments of the present disclosure.
FIG. 7 is a perspective view schematically illustrating a configuration of a first sub plate and a first terminal plate according to one or more embodiments of the present disclosure;
FIG. 8 is a side view schematically illustrating a configuration of a first sub plate and a first terminal plate according to one or more embodiments of the present disclosure;
FIG. 9 is a plan view schematically illustrating a configuration of a welding line of a first tab member according to one or more embodiments of the present disclosure;
FIG. 10 is an enlarged view of main parts of FIG. 9;
FIG. 11 is a diagram schematically illustrating a first sub welding line of a first sub plate according to one or more embodiments of the present disclosure;
FIG. 12 is a cross-sectional view schematically illustrating the configuration of a welding line of a first tab member according to one or more embodiments of the present disclosure;
FIGS. 13A and 13B are tables illustrating an effect of decreasing a temperature of a secondary battery according to one or more embodiments of the present disclosure;
FIGS. 14A and 14B are graphs illustrating an effect of decreasing a temperature of a secondary battery according to one or more embodiments of the present disclosure;
FIGS. 15 and 16 are plan views illustrating various shapes of a first direct connecting portion according to one or more embodiments of the present disclosure;
FIG. 17 is an exploded view schematically illustrating a configuration of a second sub plate and a second terminal plate according to one or more embodiments of the present disclosure;
FIG. 18 is a perspective view schematically illustrating a configuration of a second sub plate and a second terminal plate according to one or more embodiments of the present disclosure;
FIG. 19 is a side view schematically illustrating a configuration of a second sub plate and a second terminal plate according to one or more embodiments of the present disclosure;
FIG. 20 is a plan view schematically illustrating a configuration of a welding line of a second tab member according to one or more embodiments of the present disclosure;
FIG. 21 is an enlarged view of main parts of FIG. 20;
FIG. 22 is a diagram schematically illustrating a second sub welding line of a second sub plate according to one or more embodiments of the present disclosure;
FIG. 23 is a cross-sectional view schematically illustrating a configuration of a welding line for a second tab member according to one or more embodiments of the present disclosure;
FIG. 24 is a flowchart schematically illustrating operations of connecting a first electrode and a first terminal according to one or more embodiments of the present disclosure; and
FIG. 25 is a flowchart schematically illustrating operations of connecting a second electrode and a second terminal according to one or more embodiments of the present disclosure.

### DETAILED DESCRIPTION

Example embodiments will now be described more fully hereinafter with reference to the accompanying drawings; however, they may be embodied in different forms and should not be construed as limited to the embodiments set forth herein. Rather, these embodiments are provided so that this disclosure will be thorough and complete, and will fully convey exemplary implementations to those skilled in the art.

In the drawing figures, the dimensions of layers and regions may be exaggerated for clarity of illustration. It will also be understood that when a layer or element is referred to as being "on" another layer or substrate, it can be directly on the other layer or substrate, or intervening layers may also be present. Further, it will be understood that when a layer is referred to as being "under" another layer, it can be directly under, and one or more intervening layers may also be present. In addition, it will also be understood that when a layer is referred to as being "between" two layers, it can be the only layer between the two layers, or one or more intervening layers may also be present. Like reference numerals refer to like elements throughout.

It is to be understood that when an element or layer is referred to as being "on," "connected to," or "coupled to" another element or layer, it may be directly on, connected to, or coupled to the other element or layer or one or more intervening elements or layers may also be present. When an element or layer is referred to as being "directly on," "directly connected to," or "directly coupled to" another element or layer, there are no intervening elements or layers present. For example, when a first element is described as being "coupled" or "connected" to a second element, the first element may be directly coupled or connected to the second element or the first element may be indirectly coupled or connected to the second element via one or more intervening elements.

In the figures, dimensions of the various elements, layers, etc. may be exaggerated for clarity of illustration. The same reference numerals designate the same or like elements. As used herein, the term "and/or" includes any and all combinations of one or more of the associated listed items. Further, the use of "may" when describing embodiments of the present disclosure relates to "one or more embodiments of the present disclosure." Expressions, such as "at least one of" and "any one of," when preceding a list of elements, modify the entire list of elements and do not modify the individual elements of the list. When phrases such as "at least one of A, B, and C," "at least one of A, B, or C," "at least one selected from a group of A, B, and C," or "at least one selected from among A, B, and C" are used to designate a list of elements A, B, and C, the phrase may refer to any and all suitable combinations or a subset of A, B, and C, such as A, B, C, A and B, A and C, B and C, or A and B and C. As used herein, the terms "use," "using," and "used" may be considered synonymous with the terms "utilize," "utilizing," and "utilized," respectively. As used herein, the terms "substantially," "about," and similar terms are used as terms of approximation and not as terms of degree, and are intended to account for the inherent variations in measured or calculated values that would be recognized by those of ordinary skill in the art.

It is to be understood that, although the terms "first," "second," "third," etc. may be used herein to describe various elements, components, regions, layers, and/or sections, these elements, components, regions, layers, and/or sections should not be limited by these terms. These terms are used to distinguish one element, component, region, layer, or section from another element, component, region, layer, or section. Thus, a first element, component, region, layer, or section discussed below could be termed a second element, component, region, layer, or section without departing from the teachings of example embodiments.

Spatially relative terms, such as "beneath," "below," "lower," "lower," "above," "upper," and the like, may be used herein for ease of description to describe one element or feature's relationship to another element(s) or feature(s) as illustrated in the figures. It is to be understood that the spatially relative terms are intended to encompass different orientations of the device in use or operation in addition to the orientation depicted in the figures. For example, if the device in the figures is turned over, elements described as "below" or "beneath" other elements or features would then be oriented "above" or "over" the other elements or features. Thus, the term "below" may encompass both an orientation of above and below. The device may be otherwise oriented (e.g., rotated 90 degrees or at other orientations), and the spatially relative descriptors used herein should be interpreted accordingly.

The terminology used herein is for the purpose of describing embodiments of the present disclosure and is not intended to be limiting of the present disclosure. As used herein, the singular forms "a" and "an" are intended to include the plural forms as well, unless the context clearly indicates otherwise. It is to be further understood that the terms "includes," "including," "comprises," and/or "comprising," when used in this specification, specify the presence of stated features, integers, steps, operations, elements, and/or components but do not preclude the presence or addition of one or more other features, integers, steps, operations, elements, components, and/or groups thereof.

Also, any numerical range disclosed and/or recited herein is intended to include all subranges of the same numerical precision subsumed within the recited range. For example, a range of "1.0 to 10.0" is intended to include all subranges between (and including) the recited minimum value of 1.0 and the recited maximum value of 10.0, that is, having a minimum value equal to or greater than 1.0 and a maximum value equal to or less than 10.0, such as, for example, 2.4 to 7.6. Any maximum numerical limitation recited herein is intended to include all lower numerical limitations subsumed therein, and any minimum numerical limitation recited in this specification is intended to include all higher numerical limitations subsumed therein. Accordingly, Applicant reserves the right to amend this specification, including the claims, to expressly recite any sub-range subsumed within the ranges expressly recited herein.

References to two compared elements, features, etc. as being "the same" may mean that they are "substantially the same." Thus, the phrase "substantially the same" may include a case having a deviation that is considered low in the art, for example, a deviation of 5% or less. In addition, when a certain parameter is referred to as being uniform in a given region, it may mean that it is uniform in terms of an average.

Throughout the specification, unless otherwise stated, each element may be singular or plural.

When an arbitrary element is referred to as being disposed (or located or positioned) on the "above (or below)" or "on (or under)" a component, it may mean that the arbitrary element is placed in contact with the upper (or lower) surface of the component and may also mean that another component may be interposed between the component and any arbitrary element disposed (or located or positioned) on (or under) the component.

In addition, it is to be understood that when an element is referred to as being "coupled," "linked," or "connected" to another element, the elements may be directly "coupled," "linked," or "connected" to each other, or one or more intervening elements may be present therebetween, through which the element may be "coupled," "linked," or "connected" to another element. In addition, when a part is referred to as being "electrically coupled" to another part, the part may be directly electrically connected to another part or one or more intervening parts may be present therebetween such that the part and the another part are indirectly electrically connected to each other.

Throughout the specification, when "A and/or B" is stated, it means A, B, or A and B, unless otherwise stated. That is, "and/or" includes any or all combinations of a plurality of items enumerated. When "C to D" is stated, it means C or more and D or less, unless otherwise specified.

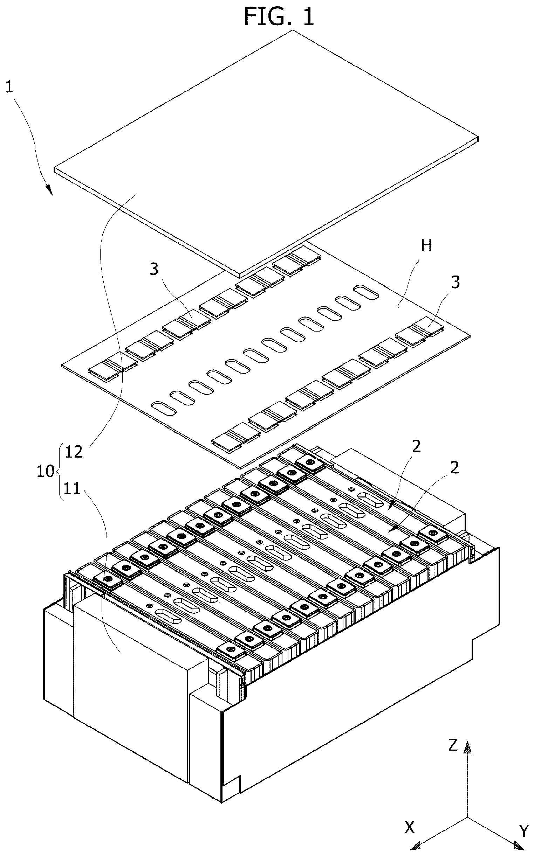

FIG. 1 is a perspective view schematically illustrating a configuration of a battery pack according to one or more embodiments of the present disclosure.

Referring to FIG. 1, the battery pack according to various embodiments may include a housing, a secondary battery, and a busbar.

A housing 10 may form a rough exterior of the battery pack and may provide a space in which a secondary battery 2 may be accommodated.

The housing 10 according to the present embodiment may include a housing body 11 and a cover 12.

The housing body 11 may be formed to have the shape of a box with an empty interior and one open side. The cross-sectional shape of the housing body 11 may be designed to have any of various shapes such as polygonal, circular, oval, or other shapes.

The cover 12 may be coupled to the housing body 11 and may close the internal space of the housing body 11. In one example, the cover 12 may be formed to have a substantially plate shape and may be disposed to face the open side of the housing body 11. The cover 12 may be fixed to the housing body 11 by any of various types of coupling methods, such as bolting, welding, fitting, etc.

The secondary battery 2 may function as a unit structure for storing and supplying power in the battery pack. The secondary battery 2 may be disposed inside the housing 10.

A plurality of secondary batteries 2 may be provided. The plurality of secondary batteries 2 may be arranged in two or more rows in at least one of a longitudinal direction (an X-axis direction based on FIG. 1) or a width direction (a Y-axis direction based on FIG. 1) of the housing 10. Although FIG. 1 illustrates that the plurality of secondary batteries 2 are arranged in one row in the longitudinal direction of the housing 10, an arrangement of the plurality of secondary batteries 2 may be designed in various forms. The plurality of secondary batteries 2 may be disposed parallel with each other. The number of the secondary batteries 2 may be variously designed according to the size, shape, or the like of the housing 10.

The plurality of secondary batteries 2 may be electrically connected by a busbar 3.

The busbar 3 according to the present embodiment may be disposed between the cover 12 and the secondary battery 2. A plurality of busbars 3 may be provided. Each busbar 3 may connect a pair of adjacent secondary batteries 2 in series or in parallel.

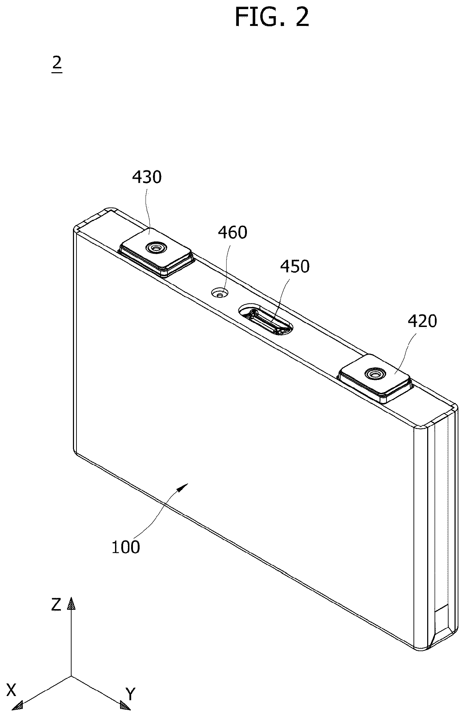

In one example, a first terminal 420 (see FIG. 2) of one secondary battery 2 of a pair of adjacent secondary batteries 2 and a second terminal 430 of the other secondary battery 2 may be disposed to face each other in the longitudinal direction of the housing 10. That is, a front surface 120 of one secondary battery 2 of the adjacent secondary batteries 2 may be disposed to face the rear surface 130 of the other secondary battery 2.

The sides of the busbar 3 may be connected to the first terminal 420 of one of a pair of adjacent secondary batteries 2 and the second terminal 430 of the other. Accordingly, the plurality of secondary batteries 2 may be connected in series with each other by the busbar 3.

However, the sides of the busbar 3 may be connected to the first terminal 420 of one of the pair of adjacent secondary batteries 2 and the second terminal 430 of the other or may be connected to the second terminal 430 of one of the pair of adjacent secondary batteries 2 and the second terminal 430 of the other.

The busbar 3 may be formed of an electrically conductive material, such as copper, aluminum, nickel, or the like. The busbar 3 may be designed to have any shape capable of connecting adjacent secondary batteries 2.

A plurality of busbars 3 may be supported inside the housing 10 by a busbar holder H.

The busbar holder H may be formed to have a flat plate shape. The busbar holder H may be disposed between the cover 12 and the secondary battery 2. The busbar 3 may be fixed to the busbar holder H by any of various types of coupling methods, such as fitting, bolting, injection molding, and the like. The busbar holder H may include an electrically insulating polymer compound material.

Hereinafter, the secondary battery 2 according to various embodiments of the present disclosure will be described.

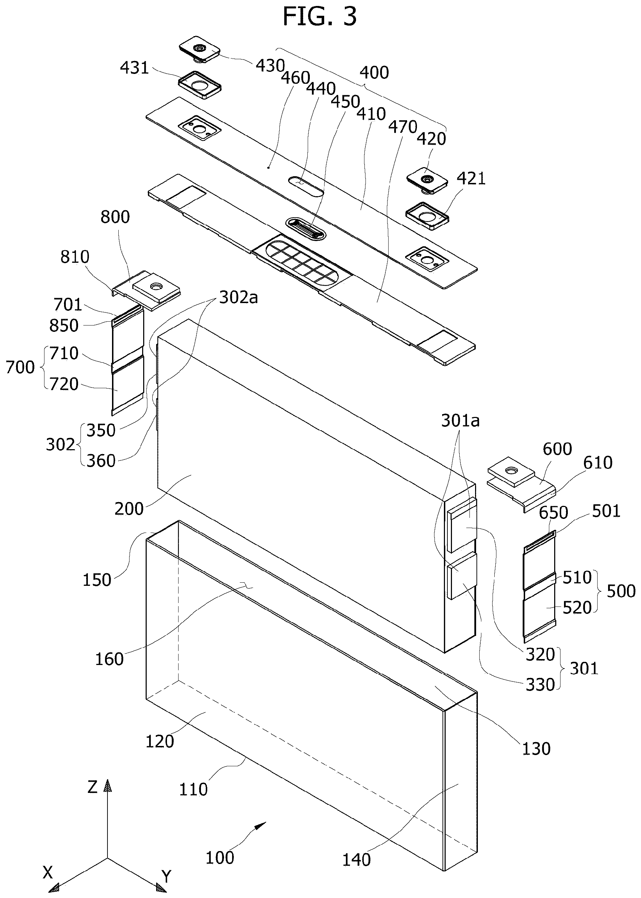

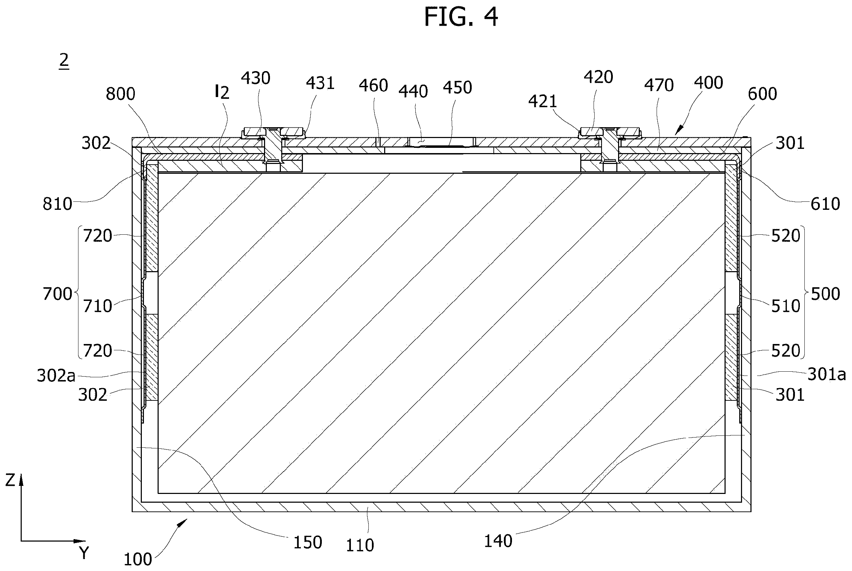

FIG. 2 is a perspective view schematically illustrating a configuration of a secondary battery according to one or more embodiments of the present disclosure, FIG. 3 is an exploded view schematically illustrating a configuration of a secondary battery according to one or more embodiments of the present disclosure, and FIG. 4 is a cross-sectional view schematically illustrating a configuration of a secondary battery according to one or more embodiments of the present disclosure.

Hereinafter, an example in which the secondary battery 2 is a lithium-ion secondary battery and a prismatic battery will be described. However, for example, the secondary battery may be a lithium polymer battery or a cylindrical battery.

Referring to FIGS. 2 to 4, the secondary battery 2 according to the embodiment may include a case 100, an electrode assembly 200, a first tab member 301, a cap assembly 400, a first sub plate 500, a first terminal plate 600, and a first direct connecting portion 650.

The case 100 forms a rough exterior of the secondary battery 2 and may accommodate the electrode assembly 200 therein.

The case 100 according to the present embodiment may include a bottom portion 110, a front surface 120, a rear surface 130, a first side surface 140, and a second side surface 150.

The bottom portion 110 may form the bottom side exterior of the case 100 (see FIG. 3). The bottom portion 110 according to the present embodiment may have a rectangular plate shape. The bottom portion 110 may be seated on a bottom surface of the housing body 11.

The front surface 120, the rear surface 130, the first side surface 140, and the second side surface 150 may form an exterior of peripheral surface of the case 100.

The front surface 120, the rear surface 130, the first side surface 140, and the second side surface 150 according to the present embodiment may have a plate shape extending upward from an edge of the bottom portion 110 (see FIG. 3). The front surface 120, the rear surface 130, the first side surface 140, and the second side surface 150 may be disposed to cover an upper space of the bottom portion 110. The front surface 120, the rear surface 130, the first side surface 140, and the second side surface 150 may be disposed to form a rectangular cross-sectional shape.

The front surface 120 and the rear surface 130 may be disposed to face each other in the longitudinal direction of the housing 10. The front surface 120 and the rear surface 130 may be disposed parallel to each other. Areas of the front surface 120 and the rear surface 130 may be the same.

The first side surface 140 and the second side surface 150 may be disposed to face each other in the width direction of the housing 10. The first side surface 140 and the second side surface 150 may be disposed parallel to each other. Areas of the first side surface 140 and the second side surface 150 may be the same. The areas of the first side surface 140 and the second side surface 150 may be smaller than the areas of the front surface 120 and the rear surface 130.

The case 100 may further include an open portion 160. The open portion 160 according to the present embodiment may be a space surrounded by upper end portions of the front surface 120, the rear surface 130, the first side surface 140, and the second side surface 150. The open portion 160 may mutually connect an internal space and an external space of the case 100.

Accordingly, the case 100 according to the present embodiment may have a rectangular shape with an open top.

A first direction to be described below may be parallel to a Y-axis with reference to FIGS. 3 and 4 and may be a direction from the second side surface 150 toward the first side surface 140. A second direction may be parallel to an X-axis with reference to FIGS. 3 and 4 and may be a direction from the front surface 120 toward the rear surface 130. A third direction may be parallel to a z-axis with reference to FIGS. 3 and 4 and may be a direction from the bottom portion 110 toward the open portion 160.

The electrode assembly 200 may function as a unit structure that performs charging and discharging operations of power in the secondary battery 2. The electrode assembly 200 may be accommodated inside the case 100.

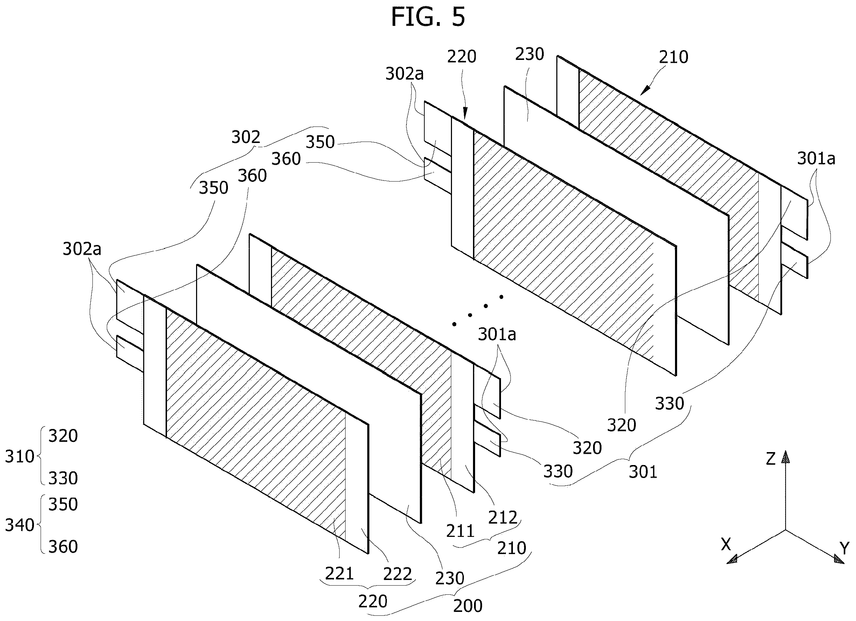

FIG. 5 is a diagram schematically illustrating a configuration of an electrode assembly according to one or more embodiments of the present disclosure.

Referring to FIGS. 2 to 5, the electrode assembly 200 according to the embodiment may include a first electrode 210, a second electrode 220, and a separator 230 disposed between the first electrode 210 and the second electrode 220. A plurality of the first electrodes 210, the separators 230, and the second electrodes 220 may be provided.

Hereinafter, as an example, the electrode assembly 200 having a stacked shape in which a plurality of first electrodes 210, separators 230, and second electrodes 220 are stacked sequentially in the second direction will be described. However, the electrode assembly 200 may be formed to have a shape wound around a winding axis clockwise or counterclockwise in a state where the first electrode 210, the separator 230, and the second electrode 220 are stacked.

The first electrode 210 may function as either a positive electrode or a negative electrode of the electrode assembly 200. Hereinafter, it will be described as an example that the first electrode 210 is the positive electrode of the electrode assembly 200. However, the first electrode 210 may function as the negative electrode of the electrode assembly 200.

The first electrode 210 according to the present embodiment may be formed to have the shape of a foil including a metal material such as aluminum or an aluminum alloy. The type, size, and shape of the first electrode 210 may vary, as long as the first electrode 210 does not cause a chemical change in the secondary battery and is conductive. The cross-sectional shape of the first electrode 210 may be changed in design in any of various shapes in addition to the rectangular shape illustrated in FIG. 5.

A plurality of first electrodes 210 may be provided. The plurality of first electrodes 210 may be arranged in a second direction between the front surface 120 and the rear surface 130 of the case 100. The number of the first electrodes 210 may be variously changed in design depending on a charging capacity of the secondary battery and the like.

At least a portion of the first electrode 210 may be coated with a first active material layer 211. Both surfaces of the first electrode 210 may be coated with the first active material layer 211or only one surface of the first electrode 210 may be coated with the first active material layer 211.

As the first electrode 210 functions as the positive electrode in the present embodiment, the first active material layer 211 may include a positive electrode active material.

The positive electrode active material may be a compound capable of reversible intercalation and deintercalation of lithium (a lithiated intercalation compound). More specifically, one or more of a composite oxide of lithium and a metal selected from cobalt, manganese, nickel, and a combination thereof may be used.

In one example, the positive electrode active material may include at least one of lithium-iron-phosphorus oxide (LiFePO₄, LFP), lithium-manganese-iron-phosphorus oxide (LiMnFePO₄, LMFP), and lithium-nickel-cobalt-manganese oxide (LiNixCoyMnzO₂, NCM). Here, 0<x<1, 0<y<1, 0<z<1, and x+y+z=1 may be satisfied. The positive electrode active material may include only one of lithium-iron-phosphorus oxide (LiFePO₄, LFP), lithium-manganese-iron-phosphorus oxide (LiMnFePO₄, LMFP), and lithium-nickel-cobalt-manganese oxide (LiNixCoyMnzO₂, NCM), and may include any two or all of lithium-iron-phosphorus oxide (LiFePO4, LFP), lithium-manganese-iron-phosphorus oxide (LiMnFePO₄, LMFP), and lithium-nickel-cobalt-manganese oxide (LiNixCoyMnzO₂, NCM).

The first active material layer 211 may further include a positive electrode conductive material.

The positive electrode conductive material is used to impart conductivity to the first active material layer 211 and any electrically conductive material that does not cause chemical changes may be used. Examples of the positive electrode conductive material may include a carbon-based material such as natural graphite, artificial graphite, carbon black, acetylene black, Ketjen black, carbon fibers, carbon nanofibers, and carbon nanotubes, a metal powder containing copper, nickel, aluminum, silver, or a metal-based material in the form of a metal fiber, a polyphenylene derivative, or a mixture thereof.

The first active material layer 211 may further include a positive electrode binder.

The positive electrode binder serves to attach the particles constituting the positive electrode active material to each other well and also attach the positive electrode active material to the first electrode 210 well.

An example of the positive electrode binder may include a non-aqueous binder, an aqueous binder, a dry binder, or a combination thereof.

The non-aqueous binder may include polyvinyl chloride, carboxylated polyvinyl chloride, polyvinyl fluoride, an ethylene propylene copolymer, polystyrene, polyurethane, polytetrafluoroethylene, polyvinylidene fluoride, polyethylene, polypropylene, polyamideimide, polyimide, or a combination thereof.

The aqueous binder may be selected from styrene-butadiene rubber, (meth)acrylated styrene-butadiene rubber, (meth)acrylonitrile-butadiene rubber, (meth)acrylic rubber, butyl rubber, a fluoroelastomer, polyethylene oxide, polyvinylpyrrolidone, polyepichlorohydrin, polyphosphazene, poly(metha)acrylonitrile, an ethylene propylene diene copolymer, polyvinylpyridine, chlorosulfonated polyethylene, latex, polyester resin, (metha)acrylic resin, phenolic resin, epoxy resin, polyvinyl alcohol, and a combination thereof.

When the aqueous binder is used as the positive electrode binder, a cellulose-based compound capable of imparting viscosity may be further included. As the cellulose-based compound, one or more of carboxymethyl cellulose, hydroxypropylmethyl cellulose, methyl cellulose, and an alkali metal salt thereof may be mixed and used. As the alkali metal, Na, K, or Li may be used.

The dry binder may be a polymeric material capable of being fiberized, for example, polytetrafluoroethylene, polyvinylidene fluoride, a polyvinylidene fluoride-hexafluoropropylene copolymer, polyethylene oxide, or a combination thereof.

The first electrode 210 may include a first uncoated portion 212 which is not coated with the first active material layer 211. The first uncoated portion 212 according to the present embodiment may be disposed at one end region of the first electrode 210 disposed to face the first side surface 140 in the case 100. However, the first uncoated portion 212 may be formed across the entire edge region of the first electrode 210.

The second electrode 220 may function as the remaining one of the positive electrode and the negative electrode of the electrode assembly 200. Hereinafter, an example in which the second electrode 220 is the negative electrode of the electrode assembly 200 will be described. However, the second electrode 220 may also function as the positive electrode of the electrode assembly 200.

A plurality of second electrodes 220 may be provided. The plurality of second electrodes 220 may be arranged in the second direction between the front surface 120 and the rear surface 130 of the case 100. The first electrode 210 and the second electrode 220 may be alternately disposed in the second direction. The second electrode 220 may be spaced a predetermined interval from the first electrode 210 in the second direction.

The second electrode 220 according to the present embodiment may be formed to have the shape of a foil including a metallic material such as copper, a copper alloy, nickel, or a nickel alloy. The second electrode 220 may vary in the type, size, and shape as long as it does not cause chemical changes in the secondary battery and is conductive. The cross-sectional shape of the first electrode 210 may be changed in design in any of various shapes in addition to the rectangular shape illustrated in FIG. 5.

At least a portion of the second electrode 220 may be coated with a second active material layer 221. Both sides of the second electrode 220 may be coated with the second active material layer 221, or alternatively, only one surface of the second electrode 220 may be coated with the second active material layer 221.

As the second electrode 220 functions as a negative electrode, the second active material layer 221 may include the negative electrode active material.

The negative electrode active material includes a material capable of reversibly intercalating/deintercalating lithium ions, lithium metal, an alloy of lithium and a metal, a material capable of doping and dedoping lithium, or a transition metal oxide.

The material capable of reversibly intercalating/deintercalating lithium ions may be a carbon-based negative electrode active material, for example, crystalline carbon, amorphous carbon, or a combination thereof. Examples of the crystalline carbon may include graphite such as amorphous, plate-like, flaky, spherical, or fibrous natural graphite or artificial graphite, and examples of the amorphous carbon may include soft carbon or hard carbon, mesophase pitch carbide, calcined coke, and the like.

As the alloy of lithium and a metal, an alloy of lithium and a metal selected from Na, K, Rb, Cs, Fr, Be, Mg, Ca, Sr, Si, Sb, Pb, In, Zn, Ba, Ra, Ge, Al, and Sn may be used.

As the material capable of doping and dedoping lithium, a Si-based negative electrode active material or Sn-based negative electrode active material may be used. The Si-based negative electrode active material may include silicon, a silicon-carbon composite, SiOx (0<x<2), a Si-Q alloy (where Q is selected from alkali metals, alkaline earth metals, group 13 elements, group 14 elements (excluding Si), group 15 elements, group 16 elements, transition metals, rare earth elements, and a combination thereof), or a combination thereof. The Sn-based negative electrode active material may include Sn, SnO₂, a Sn-based alloy, or a combination thereof.

The silicon-carbon composite may be a composite of silicon and amorphous carbon. According to one or more embodiments, the silicon-carbon composite may be in the form of silicon particles and amorphous carbon with which the surface of the silicon particles is coated. For example, the silicon-carbon composite may include a secondary particle (core) in which silicon primary particles are assembled and an amorphous carbon coating layer (shell) located on the surface of the secondary particle. The amorphous carbon may also be located between the silicon primary particles, for example, the silicon primary particles may be coated with the amorphous carbon. The secondary particles may be dispersed in an amorphous carbon matrix.

The silicon-carbon composite may further include crystalline carbon. For example, the silicon-carbon composite may include a core including crystalline carbon and silicon particles and an amorphous carbon coating layer located on a surface of the core.

The Si-based negative electrode active material or the Sn-based negative electrode active material may be used in combination with the carbon-based negative electrode active material.

The second active material layer 221 may further include a negative electrode conductive material and a negative electrode binder.

The negative electrode conductive material is used to impart conductivity to the second active material layer 221, and any electronically conductive material that does not cause chemical changes may be used. Examples of the negative electrode material may include natural graphite, artificial graphite, carbon black, acetylene black, Ketjen black, carbon-based materials such as carbon fibers, carbon nanofibers, carbon nanotubes, etc., a metal-based material in the form of a metal powder or metal fiber including copper, nickel, aluminum, silver, etc., or conductive polymers such as polyphenylene derivatives, or mixtures thereof.

The negative electrode binder serves to attach the negative electrode active material particles to each other well and also attach the negative electrode active material to the second electrode 220 well.

An example of the negative electrode binder may include a non-aqueous binder, an aqueous binder, a dry binder, or a combination thereof.

The non-aqueous binder may include polyvinyl chloride, carboxylated polyvinyl chloride, polyvinyl fluoride, an ethylene propylene copolymer, polystyrene, polyurethane, polytetrafluoroethylene, polyvinylidene fluoride, polyethylene, polypropylene, polyamideimide, polyimide, or a combination thereof.

The aqueous binder may be selected from styrene-butadiene rubber, (meth)acrylated styrene-butadiene rubber, (meth)acrylonitrile-butadiene rubber, (meth)acrylic rubber, butyl rubber, a fluoroelastomer, polyethylene oxide, polyvinylpyrrolidone, polyepichlorohydrin, polyphosphazene, poly(metha)acrylonitrile, an ethylene propylene diene copolymer, polyvinylpyridine, chlorosulfonated polyethylene, latex, polyester resin, (metha)acrylic resin, phenolic resin, epoxy resin, polyvinyl alcohol, and a combination thereof.

When the aqueous binder is used as the negative electrode binder, a cellulose-based compound capable of imparting viscosity may be further included. As the cellulose-based compound, one or more of carboxymethyl cellulose, hydroxypropylmethyl cellulose, methyl cellulose, and an alkali metal salt thereof may be mixed and used. As the alkali metal, Na, K, or Li may be used.

The dry binder may be a polymeric material capable of being fiberized, for example, polytetrafluoroethylene, polyvinylidene fluoride, a polyvinylidene fluoride-hexafluoropropylene copolymer, polyethylene oxide, or a combination thereof.

The second electrode 220 may include a second uncoated portion 222 which is not coated with the second active material layer 221. The second uncoated portion 222 according to the present embodiment may be disposed at the other end region of the second electrode 220 disposed to face the second side surface 150 from the interior of the case 100. However, the second uncoated portion 222 is not limited to such a shape, and may be formed across the entire edge region of the second electrode 220.

The separator 230 may be disposed between the first electrode 210 and the second electrode 220. The separator 230 may function to prevent a short circuit of the first electrode 210 and the second electrode 220 while allowing lithium ions to move between the first electrode 210 and the second electrode 220.

The separator 230 may be disposed to surround an entire surface area of the electrode assembly 200. Accordingly, the separator 230 can prevent the first electrode 210 and the second electrode 220 from being directly exposed to the outside of the electrode assembly 200.

As the separator 230, two or more layers of polyethylene, polypropylene, polyvinylidene fluoride, or the like may be used, and a mixed multilayer separator such as a polyethylene/polypropylene two-layer separator, a polyethylene/polypropylene/polyethylene three-layer separator, a polyethylene/polyethylene/polypropylene three-layer separator, etc. may be used.

The separator may include a porous substrate and a coating layer including an organic material, an inorganic material, or a combination thereof located on one surface or both surfaces of the porous substrate.

The porous substrate may be a polymer film formed of any one polymer selected from polyolefins such as polyethylene and polypropylene, polyesters such as polyethylene terephthalate and polybutylene terephthalate, polyacetal, polyamide, polyimide, polycarbonate, polyether ketone, polyarylether ketone, polyetherimide, polyamideimide, polybenzimidazole, polyether sulfone, polyphenylene oxide, a cyclic olefin copolymer, polyphenylene sulfide, polyethylene naphthalate, glass fiber, and polytetrafluoroethylene (PTFE) (e.g., Teflon), or a copolymer or mixture of two or more thereof.

The organic material may include a polyvinylidene fluoride-based polymer or a (meth)acrylic-based polymer.

The inorganic material may include, but is not limited thereto, inorganic particles selected from Al₂O₃, SiO₂, TiO₂, SnO₂, CeO₂, MgO, NiO, CaO, GaO, ZnO, ZrO₂, Y₂O₃, SrTiO₃, BaTiO₃, Mg(OH)₂, boehmite, and a combination thereof.

The organic material and the inorganic material may be present as a mixture in a single coating layer or may be present in a form in which a coating layer including an organic material and a coating layer including an inorganic material are stacked.

The first tab member 301 may be connected to the first electrode 210. As the first electrode 210 is exemplified as a positive electrode, the first tab member 301 may function as a positive electrode tab of the secondary battery. However, the first tab member 301 may function as a negative electrode tab of the secondary battery 2 when the first electrode 210 is a negative electrode.

The first tab member 301 may extend from the electrode assembly 200 in the first direction. In one example, the first tab member 301 may extend from the electrode assembly 200 toward the first side surface 140 in the case 100.

The first tab member 301 may include a first end surface 301a disposed to intersect the first direction. The first end surface 301a according to the embodiment may be a peripheral surface that faces the first side surface 140 in the first direction among all the peripheral surfaces of the first tab member 301. The first end surface 301a may be disposed perpendicular to the first direction. The first end surface 301a may be disposed parallel to the first side surface 140.

A plurality of first tab members 301 may be provided. The plurality of first tab members 301 may be arranged in the third direction. In one example, the first tab members 301 according to the present embodiment may be formed in a pair, and the pair of first tab members 301 (e. g. the first tab members 301 of the pair of first tab members 301) may be spaced a predetermined interval from each other in the third direction (parallel to the Z-axis direction).

The first tab member 301 according to the present embodiment may include an upper tab 320 and a lower tab 330 which are spaced apart from each other in the third direction.

The first tab member 301 according to the present embodiment may include a plurality of first tabs 310.

The first tabs 310 may each include the upper tab 320 and the lower tab 330.

The first tab 310 according to the present embodiment may have the shape of a foil extending in the first direction from the first uncoated portion 212 of the first electrode 210. The first tab 310 may have a roughly rectangular shape. However, a shape of the first tab 310 may be changed in design in various shapes.

The first tab 310 may be integrally formed with the first electrode 210. For example, the first tab 310 may be an area of the first uncoated portion 212 that remains after a portion of the first uncoated portion 212 is cut or removed by notching processing or the like. Alternatively, the first tab 310 may be manufactured separately from the first electrode 210 and then connected to the first uncoated portion 212 by welding or the like. The material of the first tab 310 may be the same as the material of the first electrode 210.

The number of first tabs 310 may be the same as the number of first electrodes 210. Each of the first tabs 310 may individually extend from the first uncoated portion 212 of a different first electrode 210. The adjacent first tabs 310 may be disposed to face each other in the second direction. That is, the plurality of first tabs 310 may be disposed in the second direction. The adjacent first tabs 310 may be disposed parallel to each other. Accordingly, the first tab member 301 according to the present embodiment may be an assembly of the plurality of first tabs 310 arranged in the second direction. In addition, the first end surface 301a may be an assembly of end surfaces of a plurality of first tabs 310 arranged in the second direction. The adjacent first tabs 310 may be in contact with each other and may be spaced apart from each other by a thickness of the separator 230.

The secondary battery 2 according to the present embodiment may further include a second tab member 302.

The second tab member 302 may be connected to the second electrode 220. As the second electrode 220 is exemplified as a negative electrode, the second tab member 302 may function as a negative electrode tab of the secondary battery 2. However, the second tab member 302 may function as a positive electrode tab of the secondary battery 2 when the second electrode 220 is a positive electrode.

The second tab member 302 may extend from the electrode assembly 200 in a direction opposite to the first direction (e.g., the negative Y-axis direction). In one example, the second tab member 302 may extend from the electrode assembly 200 toward the second side surface 150 inside the case 100. That is, the first tab member 301 and the second tab member 302 may extend in opposite directions from the electrode assembly 200.

The second tab member 302 may include a second end surface 302a disposed to intersect the first direction. The second end surface 302a according to an embodiment may be a peripheral surface that faces the second side surface 150 in the first direction among all the peripheral surfaces of the second tab member 302. The second end surface 302a may be disposed perpendicular to the first direction. The second end surface 302a may be disposed parallel to the second side surface 150.

A plurality of second tab members 302 may be provided. The plurality of second tab members 302 may be arranged in the third direction. In one example, the second tab members 302 according to the present embodiment may be formed in a pair, and the pair of second tab members 302 (e. g. the second tab members 302 of the pair of second tab members 302) may be spaced a predetermined interval from each other in the third direction.

The second tab member 302 according to the present embodiment may include an upper tab 350 and a lower tab 360 which are spaced apart from each other in the third direction.

The second tab member 302 may include a plurality of second tabs 340.

The second tabs 340 may each include the upper tab 350 and the lower tab 360.

The second tab 340 according to the present embodiment may have the shape of a foil extending in a first direction from the second uncoated portion 222 of the second electrode 220. The second tab 340 may have a roughly rectangular shape. However, a shape of the second tab 340 is not limited thereto and may be changed in design in various shapes.

The second tab 340 may be integrally formed with the second electrode 220. For example, the second tab 340 may be an area of the uncoated portion 222 that remains after a portion of the second uncoated portion 222 is cut or removed by notching processing or the like. Alternatively, the second tab 340 may be manufactured separately from the first electrode 210 and then connected to the second uncoated portion 222 by welding or the like. The material of the second tab 340 may be the same as the material of the second electrode 220.

The number of second tabs 340 may be the same as the number of second electrodes 220. Each of the second tabs 340 may individually extend from the second uncoated portion 222 of a different second electrode 220. The adjacent second tabs 340 may be disposed to face each other in the second direction. That is, the plurality of second tabs 340 may be disposed in the second direction. The adjacent second tabs 340 may be disposed parallel to each other. Accordingly, the second tab member 302 according to the present embodiment may be an assembly of the plurality of second tabs 340 arranged in the second direction. In addition, the second end surface 302a may be an assembly of end surfaces of a plurality of second tabs 340 arranged in the second direction. The adjacent second tabs 340 may be in contact with each other and may be spaced apart from each other by a thickness of the separator 230.

The cap assembly 400 may be coupled to the case 100 and may seal the case 100. The cap assembly 400 may be disposed to face the electrode assembly 200 in the third direction.

The cap assembly 400 according to the present embodiment may include a cap plate 410 (see FIG. 3), the first terminal 420, and the second terminal 430.

The cap plate 410 may form a rough exterior of the cap assembly 400 and may support all the first terminal 420 and the second terminal 430.

The cap plate 410 according to the present embodiment may be formed to have a flat plate shape. The cap plate 410 may be disposed at the open portion 160 of the case 100. The cap plate 410 may be disposed to face the electrode assembly 200 in the third direction. That is, the cap plate 410 may be disposed at a position spaced a predetermined distance from the electrode assembly 200 in the third direction. The cap plate 410 may be disposed parallel to the bottom portion 110 of the case 100.

The cap plate 410 may be seated on an upper end portion of the case 100, more specifically, upper end portions of the front surface 120, the rear surface 130, the first side surface 140, and the second side surface 150. The cap plate 410 may be coupled to the case 100 by any of various types of coupling methods such as welding, bolting, fitting, etc.

The first terminal 420 may protrude outward from the cap plate 410. The first terminal 420 may be electrically connected to the first electrode 210. As the first electrode 210 according to the present embodiment functions as a positive electrode, the first terminal 420 may be exemplified as a positive terminal of the secondary battery.

The first terminal 420 according to the present embodiment may be inserted into the cap plate 410. An upper end portion of the first terminal 420 may protrude from the cap plate 410 in the first direction and/or the third direction. Although FIG. 3 illustrates an example in which the first terminal 420 has a quadrangular cross-sectional shape, the cross-sectional shape of the first terminal 420 may be changed to any of various shapes such as a circle, an oval, a polygon, etc. The first terminal 420 may be formed of an electrically conductive material, such as aluminum, nickel, copper, etc.

A first gasket 421 may be installed between the cap plate 410 and the first terminal 420. The first gasket 421 may electrically insulate the cap plate 410 from the first terminal 420 and may block moisture or foreign materials from being introduced between the cap plate 410 and the first terminal 420.

The first gasket 421 according to the present embodiment may be formed of an insulating material such as polyethylene (PE), polypropylene (PP), polyethylene terephthalate (PET) rubber, or the like. The first gasket 421 may be fixed between the cap plate 410 and the first terminal 420 by press-fitting, injection, adhesion, etc.

The second terminal 430 may protrude outward from the cap plate 410 at a position spaced apart from the first terminal 420. The second terminal 430 may be electrically connected to the second electrode 220. As the second electrode 220 according to the present embodiment functions as a negative electrode, the second terminal 430 may be exemplified as a negative electrode terminal of the secondary battery 2.

The second terminal 430 according to the present embodiment may be inserted into the inside of the cap plate 410. An upper end portion of the second terminal 430 may protrude from the cap plate 410 in the first direction and/or the third direction. Although FIG. 3 illustrates an example in which the second terminal 430 has a quadrangular cross-sectional shape, the cross-sectional shape of the second terminal 430 may be changed to various shapes such as a circle, an oval, a polygon, etc. The second terminal 430 may be formed of an electrically conductive material such as aluminum, nickel, copper, or the like. The second terminal 430 may be disposed at a position spaced a predetermined distance from the first terminal 420 in a direction opposite to the first direction.

A second gasket 431 may be installed between the cap plate 410 and the second terminal 430. The second gasket 431 may electrically insulate the cap plate 410 from the second terminal 430 and may block moisture or foreign materials from being introduced between the cap plate 410 and the second terminal 430.

The second gasket 431 according to the present embodiment may be formed of an insulating material such as polyethylene (PE), polypropylene (PP), polyethylene terephthalate (PET) rubber, or the like. The second gasket 431 may be fixed between the cap plate 410 and the second terminal 430 by press-fitting, injection, adhesion, etc.

The cap assembly 400 according to the present embodiment may further include a vent hole 440 and a vent 450.

The vent hole 440 according to the present embodiment may be formed to pass through both surfaces of the cap plate 410 in the third direction. The vent hole 440 may function as a component providing a path along which flames, gas, smoke, and the like formed inside the case 100 are discharged to the outside of the case 100 when thermal runaway occurs in the secondary battery 2 during an overcurrent or the like. The vent hole 440 may be disposed between the first terminal 420 and the second terminal 430. A cross-sectional shape of the vent hole 440 may be changed in any of various shapes such as an oval, a circle, a polygon, or the like.

The vent 450 may be installed in the vent hole 440 and may be opened or closed in response to a change in the internal pressure of the case 100. That is, the vent 450 may close the vent hole 440 during a normal operation of the secondary battery 2 to prevent an electrolyte or the like inside the case 100 from leaking out to the outside of the case 100 and to block moisture, foreign matter, or the like from being introduced into the case 100. The vent 450 may open the vent hole 440 during thermal runaway of the secondary battery 2 to guide flames, gas, smoke, and the like formed inside the case 100 to be discharged to the outside of the case 100.

The vent 450 according to the present embodiment may be formed to have substantially a plate shape. The vent 450 may be fixed to the cap plate 410 by any of various types of coupling methods such as welding, bolting, fitting, etc. The vent 450 may be disposed inside the vent hole 440 or may be disposed on an upper side or a lower side of the cap plate 410 to face the vent hole 440 in the first direction.

A thickness of the vent 450 in the third direction may be smaller than a thickness of the cap plate 410 in the third direction. Accordingly, when the internal pressure of the case 100 is increased, the vent 450 may be easily ruptured or broken. The vent 450 may include a notch that is recessed in the vent 450 to be preferentially broken when the internal pressure of the case 100 is increased, e. g. exceeds a predetermined threshold value of the internal pressure.

The cap assembly 400 according to the present embodiment is formed through the cap plate 410 and may further include an electrolyte injection port 460 where a sealing cap may be installed. The electrolyte injection port 460 may be disposed to be spaced a predetermined distance from the vent hole 440 in the first direction or in a direction opposite to the first direction. The electrolyte injection port 460 may be disposed between the first terminal 420 and the second terminal 430.

The cap assembly 400 according to the present embodiment may further include an insulating plate 470.

The insulating plate 470 may be disposed between the cap plate 410 and the electrode assembly 200. The insulating plate 470 may insulate the cap plate 410 and the electrode assembly 200 by preventing the cap plate 410 from being in direct contact with the electrode assembly 200. The insulating plate 470 may fix a position of the electrode assembly 200 inside the case 100. The insulating plate 470 can prevent the electrode assembly 200 from breaking when the cap plate 410 is deformed to the inside of the case 100 due to an external impact or the like.

The insulating plate 470 according to the present embodiment may be disposed inside the case 100 to face the electrode assembly 200 in the third direction. That is, the cap plate 410, the insulating plate 470, and the electrode assembly 200 may be disposed sequentially in the third direction. The insulating plate 470 may be secured to the inner surface of the case 100 by any of various types of coupling methods such as fitting, welding, bolting, adhesion, etc. The insulating plate 470 may be in contact with one surface of the electrode assembly 200 disposed to face the open portion 160. The insulating plate 470 may be formed of an insulating material such as polyethylene (PE), polypropylene (PP), polyethylene terephthalate (PET) rubber, etc.

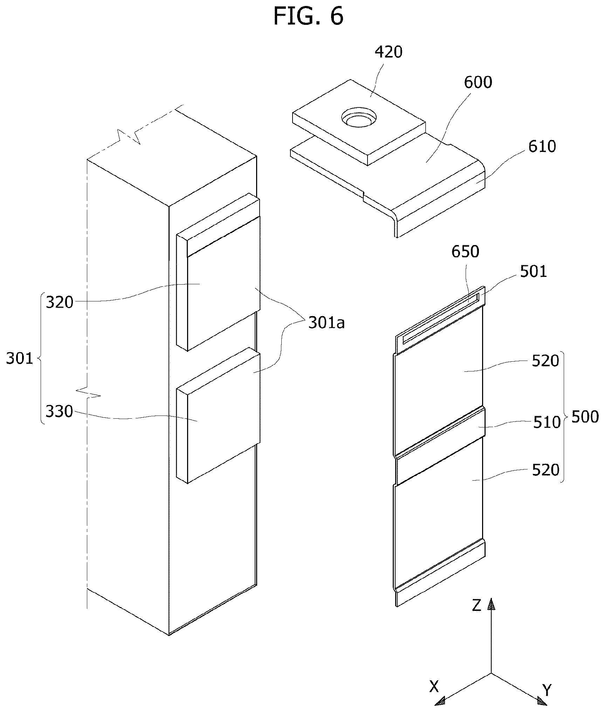

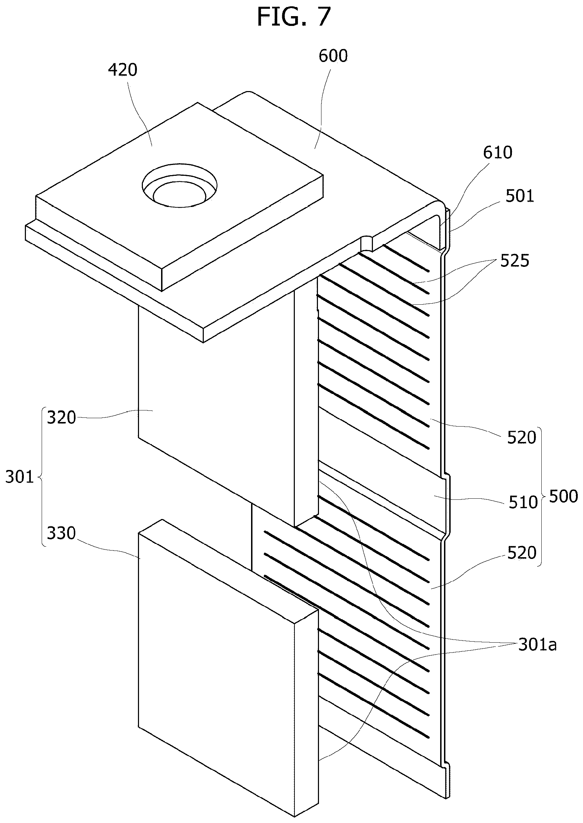

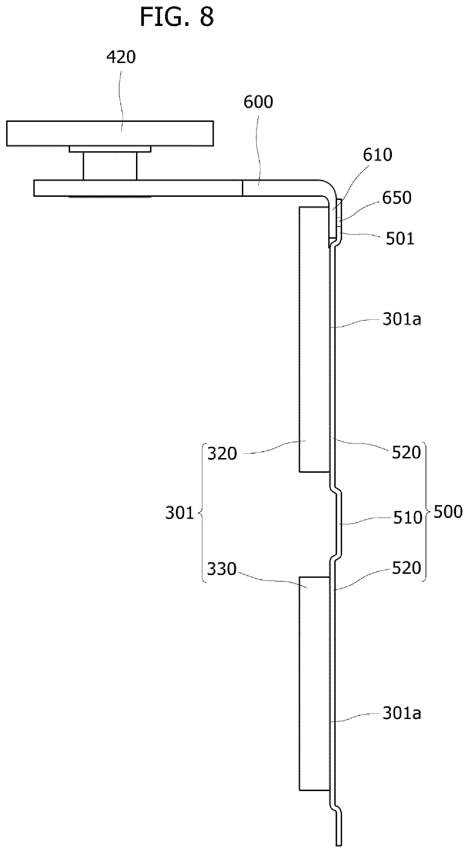

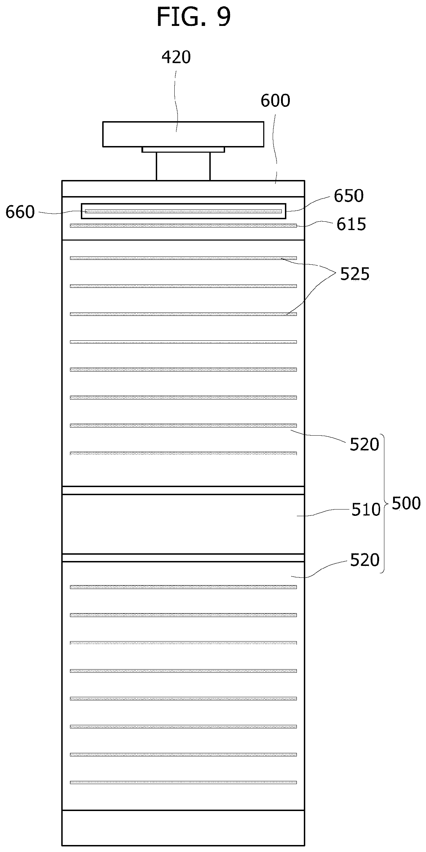

FIG. 6 is an exploded view schematically illustrating a configuration of a first sub plate and a first terminal plate according to one or more embodiments of the present disclosure, FIG. 7 is a perspective view schematically illustrating a configuration of a first sub plate and a first terminal plate according to one or more embodiments of the present disclosure, FIG. 8 is a side view schematically illustrating a configuration of a first sub plate and a first terminal plate according to one or more embodiments of the present disclosure, and FIG. 9 is a plan view schematically illustrating a configuration of a welding line of a first tab member according to one or more embodiments of the present disclosure.

Referring to FIGS. 2 to 9, the first sub plate 500 according to the present embodiment may be disposed between the electrode assembly 200 and the case 100. The first sub plate 500 may be connected to the first tab member 301. The first sub plate 500 may function as a component to constrain the relative movement of the plurality of first tabs 310 constituting the first tab member 301 to maintain a constant area of the first end surface 301a and provide an electrical connection between the first tab member 301 and the first terminal plate 600. Accordingly, the first sub plate 500 can prevent the electrical connection to some of the first tabs 310 from being missed due to relative movement of the first tabs 310.

The first sub plate 500 may be formed to have a substantially flat plate shape. The first sub plate 500 may be disposed between the first end surface 301a of the first tab member 301 and the first side surface 140.

The first sub plate 500 may be disposed parallel to the first end surface 301a and the first side surface 140. One surface of the first sub plate 500 may be in contact with the first end surface 301a of the first tab member 301. In this case, an end portion of the first tab 310 may be in contact with the first sub plate 500 perpendicular to the first end surface 301a of the first tab member 301 without bending or deformation. An area of the first sub plate 500 may be larger than an area of the first end surface 301a. Accordingly, the first sub plate 500 may be in contact with all end portions of the plurality of first tabs 310. A shape of the first sub plate 500 may be changed in design in any of various shapes such as a circle, an oval, a polygon, etc. in addition to a quadrangle.

The first sub plate 500 may be formed of a conductive material such as aluminum, copper, nickel, or the like.

More specifically, the first sub plate 500 according to the present embodiment may include a first center plate 510 and a first extension plate 520.

The first center plate 510 may form a central portion of an exterior of the first sub plate 500.

The first center plate 510 according to the present embodiment may be disposed between the electrode assembly 200 and the first side surface 140. The first center plate 510 may be disposed to face a side surface of the electrode assembly 200 positioned between adjacent first tab members 301 in the first direction.

Both end portions of the first center plate 510 may extend a predetermined distance toward the electrode assembly 200. The extension distance of both end portions of the first center plate 510 may be changed in design in various ways within a distance at which the first extension plate 520 to be described below may be in contact with the first sub plate 500.

The first extension plate 520 may extend from the first center plate 510 and may be in contact with the first tab member 301.

The first extension plate 520 according to the present embodiment may be formed to have a substantially flat plate shape. The first extension plate 520 may extend from the first center plate 510 in a direction parallel to the third direction.

The first extension plates 520 may be provided in a pair. The pair of first extension plates 520 may extend from both end portions of the first center plate 510 in each of the third direction and an opposite direction of the third direction. The pair of first extension plates 520 may individually be in contact with different first tab members 301. That is, each of the upper tab 320 and the lower tab 330 of the first tab member 301 may be in contact with the first extension plate 520.

The first sub plate 500 and the first tab member 301 may be connected by laser welding. In one example, the first sub plate 500 and the first tab member 301 may be provided with a first sub welding line 525 connecting the first sub plate 500 and the first tab member 301.

The first sub welding line 525 according to the present embodiment may extend from the first sub plate 500 toward the first tab member 301. The first sub welding line 525 may be formed by curing a mixture of the first sub plate 500 and the first tab member 301 which are melted by heat generated during laser welding.

The first sub welding line 525 may protrude linearly from an outer surface of the first sub plate 500 disposed to face the first side surface 140. The first sub welding line 525 may be disposed parallel with the second direction. Accordingly, the first sub welding line 525 may simultaneously join the plurality of first tabs 310 stacked in the second direction to the first sub plate 500.

A plurality of first sub welding lines 525 may be provided. The plurality of first sub welding lines 525 may be disposed in the third direction on the first sub plate 500.

The first terminal plate 600 may be connected to the first terminal 420 and the first sub plate 500. The first terminal plate 600 may function as a component for electrically connecting the first terminal 420 and the first sub plate 500. The first terminal plate 600 may be formed of an electrically conductive material such as aluminum, copper, nickel, or the like.

The first terminal plate 600 according to the present embodiment may be disposed between the electrode assembly 200 and the first terminal 420.

The first terminal plate 600 may be spaced a predetermined distance from the lower surface of the first terminal 420 in the third direction. The first terminal plate 600 may be mechanically and electrically connected to the first terminal 420 by a rivet, a bolt, or the like. In other embodiments, the first terminal plate 600 may be in direct contact with the lower surface of the first terminal 420 and may be mechanically and electrically connected to the first terminal 420 by welding or the like.

The first terminal plate 600 may be disposed inside the insulating plate 470, or in other embodiments, may be disposed on an upper side or lower side of the insulating plate 470.

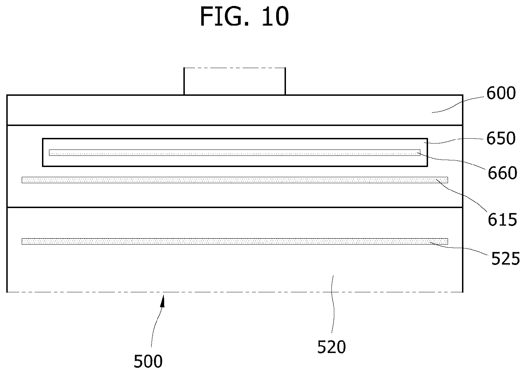

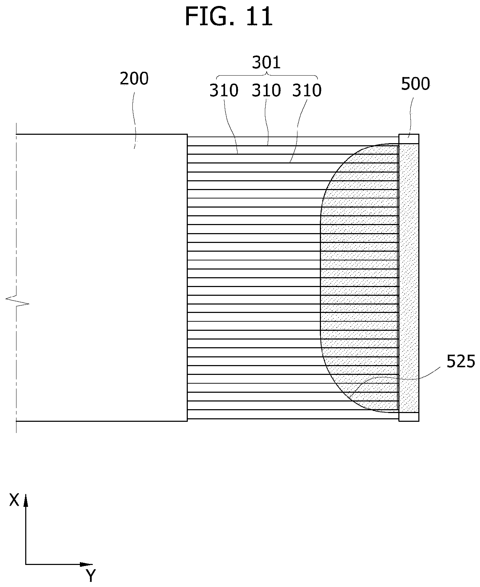

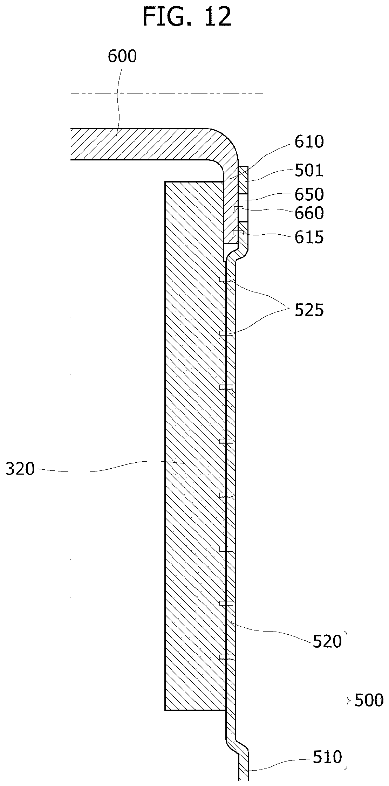

FIG. 10 is an enlarged view of the main part of FIG. 9, FIG. 11 is a diagram schematically illustrating a first sub welding line of a first sub plate according to one or more embodiments of the present disclosure, and FIG. 12 is a cross-sectional view schematically illustrating the configuration of a welding line of a first tab member according to one or more embodiments of the present disclosure.

Referring to FIGS. 10 to 12, the first terminal plate 600 and the first sub plate 500 of the present embodiment may be integrated by a first welding line 615.

The first terminal plate 600 may include a first connecting portion 610 that bends toward the first sub plate 500, and the first sub plate 500 and the first connecting portion 610 may be integrated by the first welding line 615.

A first connecting groove portion 501 in which the first connecting portion 610 is seated may be formed in the first sub plate 500. Since the first connecting groove portion 501 may accommodate the first connecting portion 610 having a certain length and thickness, the first sub plate 500 and the first terminal plate 600 may be coupled without a step.

In this way, the first welding line 615 may be formed in a state in which the first connecting portion 610 of the first terminal plate 600 is accommodated in the first connecting groove portion 501 of the first sub plate 500 to integrate the first sub plate 500 and the first terminal plate 600.

The first welding line 615 may be disposed parallel with the first sub welding line 525. The first welding line 615 may be formed by curing a mixture of the first sub plate 500 and the first terminal plate 600 which are melted by heat generated during laser welding.

The first direct connecting portion 650 may increase a current path to improve performance of the secondary battery 2.

In one example, the first direct connecting portion 650 may be formed in the first sub plate 500 and function as a component that allows the first terminal plate 600 and the first tab member 301 to be directly welded.

The first tab member 301 may include the upper tab 320 and the lower tab 330, and a first direct connecting portion 650 may correspond to the upper tab 320. In addition, the upper tab 320 may be formed with a longer length in the third direction than the lower tab 330.

This structural feature is due to more current flowing through the upper tab 320. That is, in the case of the upper tab 320 and the lower tab 330, since 70% or more of the current is transmitted through the upper tab 320 to the terminal, the current path may be improved, and heat generation can be prevented by making the upper tab 320 wider than the lower tab 330.

An upper end portion of the upper tab 320 is in contact with the first connecting portion 610, and the first direct connecting portion 650 may be formed in an upper end of the first sub plate 500 to form a through hole through which the first connecting portion 610 is exposed.

In addition, the upper tab 320 and the first connecting portion 610 may be connected by a first reinforcement welding line 660.

The first reinforcement welding line 660 may be electrically connected to the first connecting portion 610 of the first terminal plate 600 exposed through the first direct connecting portion 650 and the upper tab 320 in contact with the first connecting portion 610.

The first reinforcement welding line 660 may be disposed parallel with the first welding line 615. The first direct connecting portion 650 may have a shape of a straight line extending in the second direction in the first sub plate 500, and the first reinforcement welding line 660 may be formed along the first direct connecting portion 650.

The first reinforcement welding line 660 may be formed by curing a mixture of the first connecting portion 610 of the first terminal plate 600 and the upper tab 320 which are melted by heat generated during laser welding.

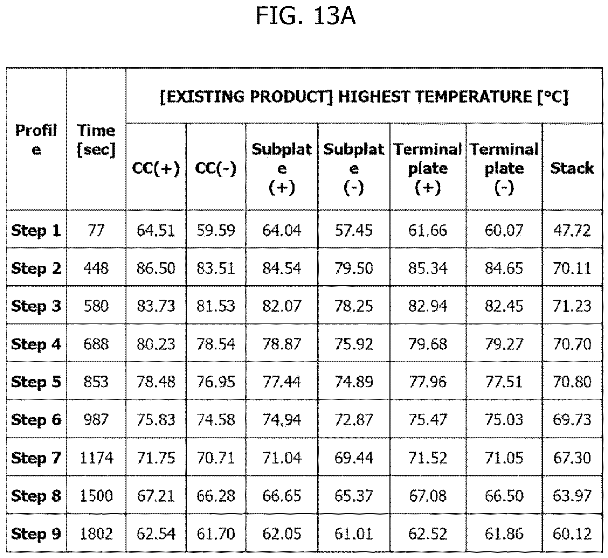

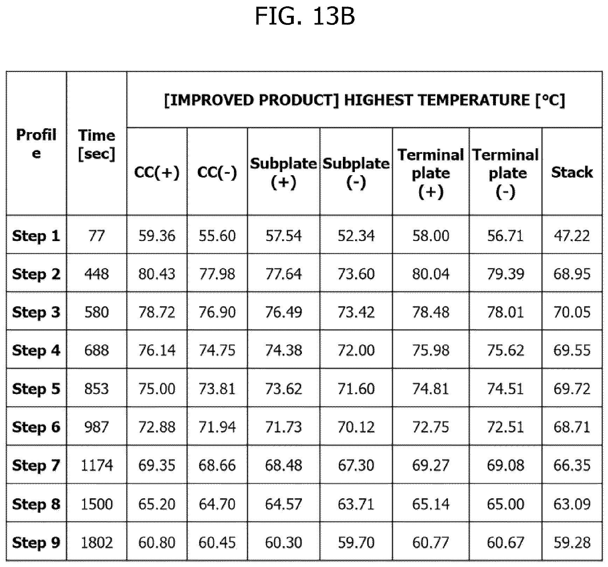

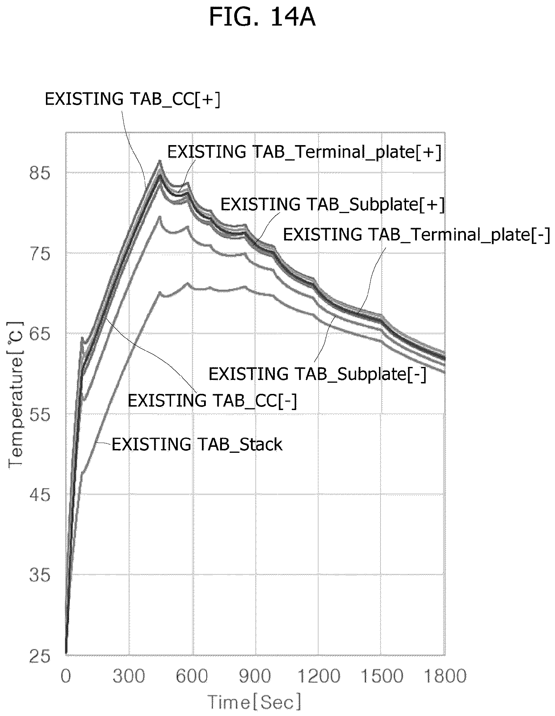

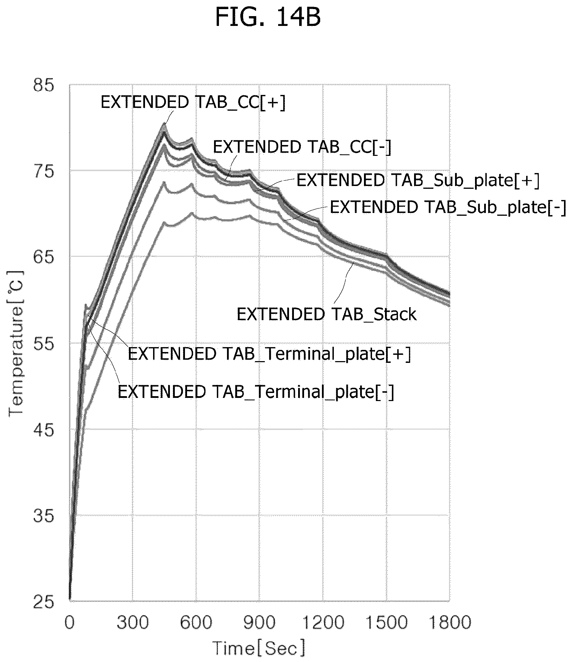

FIGS. 13A and 13B are tables illustrating an effect of decreasing a temperature of a secondary battery according to one or more embodiments of the present disclosure, and FIGS. 14A and 14B are graphs illustrating an effect of decreasing a temperature of a secondary battery according to one or more embodiments of the present disclosure.

Referring to FIGS. 13A, 13B, 14A and 14B, it can be seen that by forming a width of the upper tab 320 according to the present embodiment to be greater than the lower tab 330, and by directly connecting the upper end portion of the upper tab 320 to the first terminal plate 600 through the first direct connecting portion 650, the current path can be increased, thereby reducing heat generation compared to related methods.

More specifically, when analyzing the current flow, about 70% of the current flows to a stack through the upper tab 320, and about 30% of the current flows to the stack through the lower tab 330. Due to the current path, since a portion of the upper tab 320 is connected to the first terminal plate 600 by the first reinforcement welding line 660 through the first direct connecting portion 650, an overall temperature of the component can be decreased.

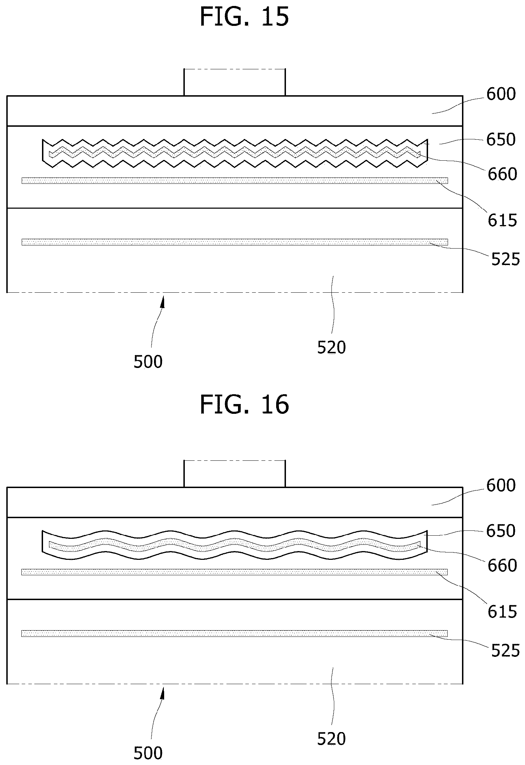

FIGS. 15 and 16 are plan views illustrating various shapes of a first direct connecting portion according to one or more embodiments of the present disclosure. The first direct connecting portion may be formed in various shapes for strength enhancement.

Referring to FIG. 15, the first direct connecting portion 650 may be formed in a zigzag shape. In addition, referring to FIG. 16, the first direct connecting portion 650 may be formed in a wavy shape. The first reinforcement welding line 660 is also formed in the zigzag shape or the wavy shape along the zigzag shape or the wavy shape, and the bonding thereof may be further reinforced by curing a mixture of the first connecting portion 610 of the first terminal plate 600 and the upper tab 320 by the heat generated during previous welding.

The secondary battery 2 according to the present embodiment may include a second sub plate 700, a second terminal plate 800, and a second direct connecting portion 850.

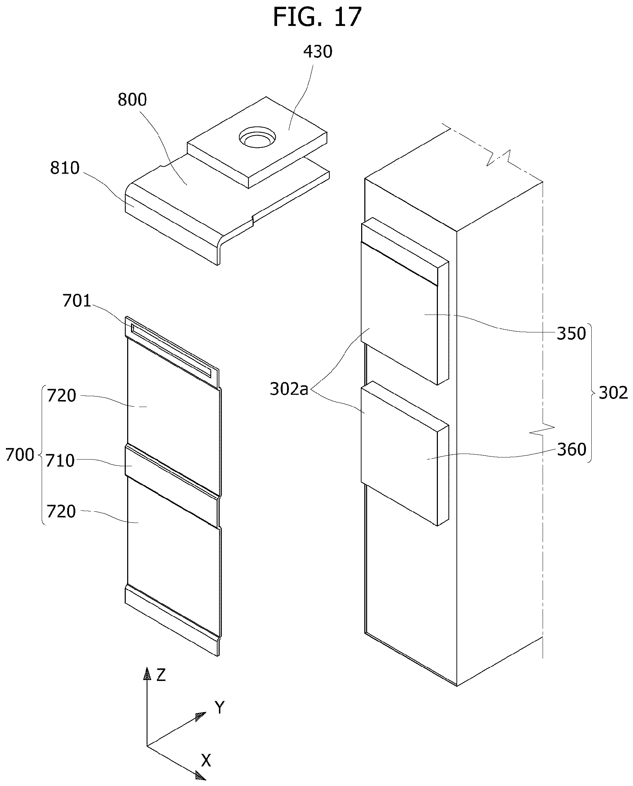

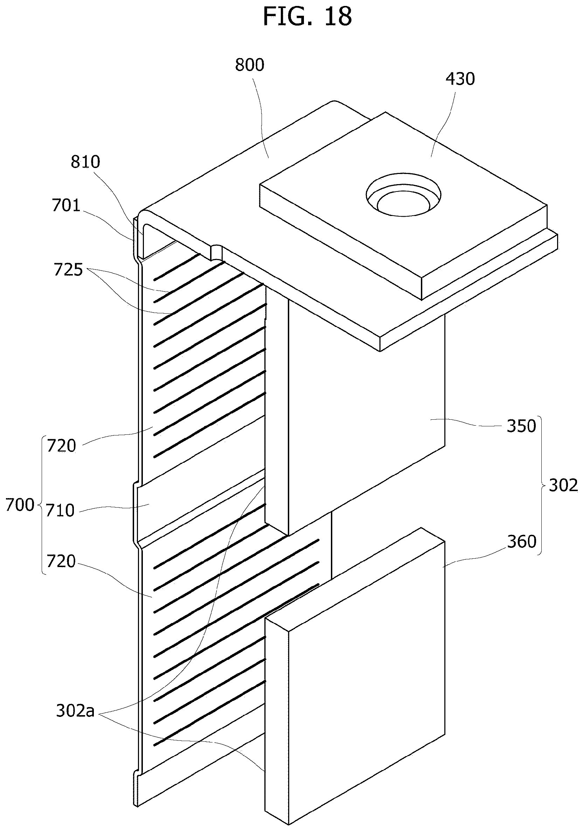

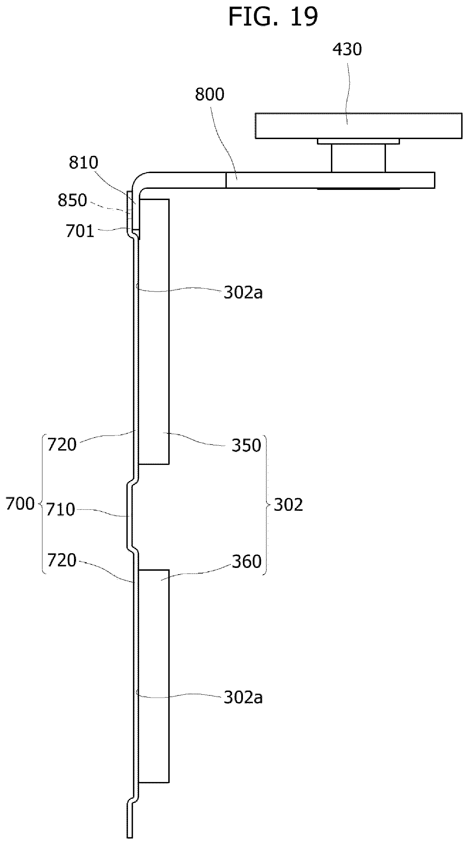

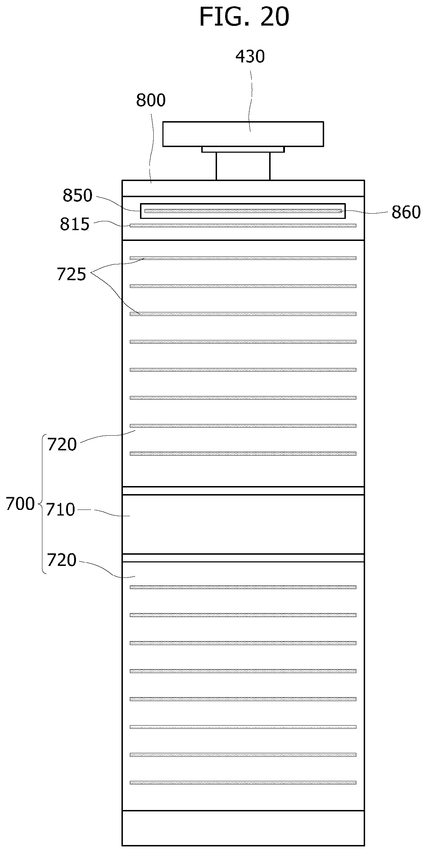

FIG. 17 is an exploded view schematically illustrating a configuration of a second sub plate and a second terminal plate according to one or more embodiments of the present disclosure, FIG. 18 is a perspective view schematically illustrating a configuration of a second sub plate and a second terminal plate according to one or more embodiments of the present disclosure, FIG. 19 is a side view schematically illustrating a configuration of a second sub plate and a second terminal plate according to one or more embodiments of the present disclosure, and FIG. 20 is a plan view schematically illustrating a configuration of a welding line of a second tab member according to one or more embodiments of the present disclosure.

Referring to FIGS. 2 to 5 and FIGS. 17 to 20, the second sub plate 700 according to the present embodiment may be disposed between the electrode assembly 200 and the case 100.

The second sub plate 700 may be connected to the second tab member 302. The second sub plate 700 may function as a component to constrain the relative movement of the plurality of second tabs 340 constituting the second tab member 302 to maintain a constant area of the second end surface 302a and provide an electrical connection between the second tab member 302 and the second terminal plate 800.

Accordingly, the second sub plate 700 can prevent the electrical connection to some of the second tabs 340 from being missed due to relative movement of the second tabs 340.

The second sub plate 700 may be formed to have a substantially flat plate shape. The second sub plate 700 may be disposed between the second end surface 302a of the second tab member 302 and the second side surface 150.

The second sub plate 700 may be disposed parallel to the second end surface 302a and the second side surface 150. One surface of the second sub plate 700 may be in contact with the second end surface 302a of the second tab member 302. In this case, an end portion of the second tab 340 may be in contact with the second end surface 302a of the second tab member 302 perpendicular to the second end surface 302a of the second tab member 302 without bending or deformation. An area of the second sub plate 700 may be larger than an area of the second end surface 302a. Accordingly, the second sub plate 700 may be in contact with all end portions of the plurality of second tabs 340. A shape of the second sub plate 700 may be changed in design in any of various shapes such as a circle, an oval, a polygon, etc. in addition to a quadrangle.

The second sub plate 700 may be formed of a conductive material such as aluminum, copper, nickel, or the like.

More specifically, the second sub plate 700 according to the present embodiment may include a second center plate 710 and a second extension plate 720.

The second center plate 710 may form an exterior of a central portion of the second sub plate 700.

The second center plate 710 according to the present embodiment may be disposed between the electrode assembly 200 and the second side surface 150. The second center plate 710 may be disposed to face a side surface of the electrode assembly 200 positioned between adjacent second tab members 302 in the first direction.

Both end portions of the second center plate 710 may extend a predetermined distance toward the electrode assembly 200. The extension distance of both end portions of the second center plate 710 may be changed in design in various ways within a distance at which the second extension plate 720 to be described below may be in contact with the second sub plate 700.

The second extension plate 720 may extend from the second center plate 710 and may be in contact with the second tab member 302.

The second extension plate 720 according to the present embodiment may be formed to have a substantially flat plate shape. The second extension plate 720 may extend from the second center plate 710 in a direction parallel to the third direction.

The second extension plates 720 may be provided in a pair. The pair of second extension plates 720 may extend from both end portions of the second center plate 710 in each of the third direction and an opposite direction of the third direction. The pair of second extension plates 720 may individually be in contact with different second tab members 302. That is, each of the upper tab 320 and the lower tab 330 of the second tab member 302 may be in contact with the second extension plate 720.

The second sub plate 700 and the second tab member 302 may be connected to each other by laser welding. In one example, the second sub plate 700 and the second tab member 302 may be provided with a second sub welding line 725 connecting the second sub plate 700 and the second tab member 302.

The second sub welding line 725 according to the present embodiment may extend from the second sub plate 700 toward the second tab member 302. The second sub welding line 725 may be formed by curing a mixture of the second sub plate 700 and the second tab member 302 which are melted by heat generated during laser welding.

The second sub welding line 725 may protrude linearly from an outer surface of the second sub plate 700 disposed to face the second side surface 150. The second sub welding line 725 may be disposed parallel with the second direction. Accordingly, the second sub welding line 725 may simultaneously join the plurality of second tabs 340 stacked in the second direction to the second sub plate 700.

A plurality of second sub welding lines 725 may be provided. The plurality of second sub welding lines 725 may be disposed in the third direction on the second sub plate 700.

The second terminal plate 800 may be connected to the second terminal 430 and the second sub plate 700. The second terminal plate 800 may function as a component for electrically connecting the second terminal 430 and the second sub plate 700. The second terminal plate 800 may be formed of an electrically conductive material such as aluminum, copper, nickel, or the like.

The second terminal plate 800 according to the present embodiment may be disposed between the electrode assembly 200 and the second terminal 430.

The second terminal plate 800 may be spaced a predetermined distance from the lower surface of the second terminal 430 in the third direction. The second terminal plate 800 may be mechanically and electrically connected to the second terminal 430 by a rivet, a bolt, or the like. In other embodiments, the second terminal plate 800 may be in direct contact with the lower surface of the second terminal 430 and may be mechanically and electrically connected to the second terminal 430 by welding or the like.

The second terminal plate 800 may be disposed inside the insulating plate 470, or in other embodiments, may be disposed on an upper side or lower side of the insulating plate 470.

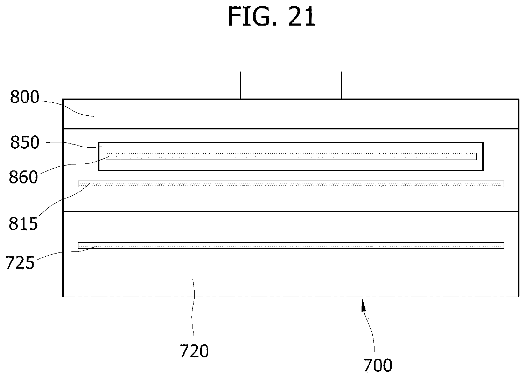

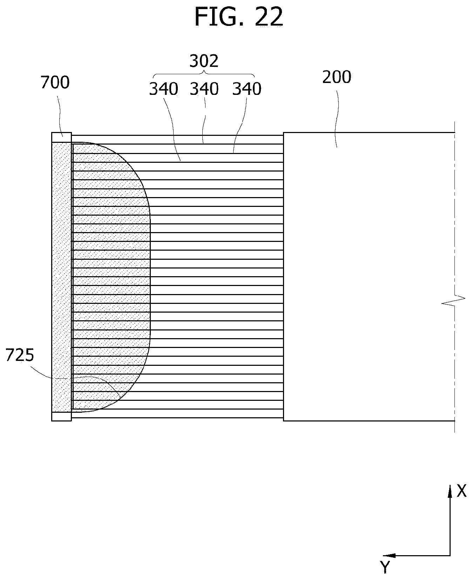

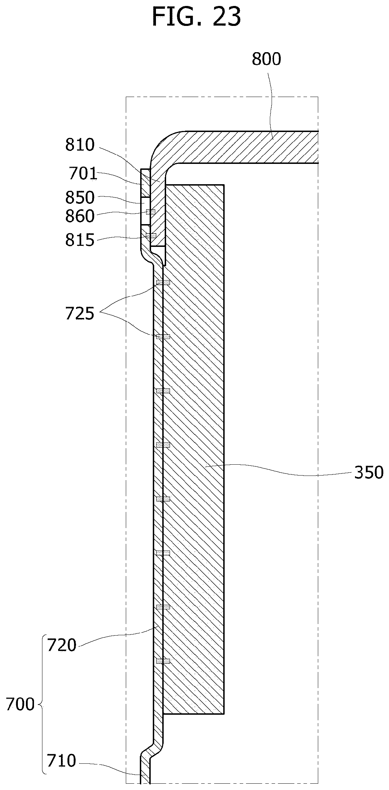

FIG. 21 is an enlarged view of the main part of FIG. 20, FIG. 22 is a diagram schematically illustrating a second sub welding line of a second sub plate according to one or more embodiments of the present disclosure, and FIG. 23 is a cross-sectional view schematically illustrating a configuration of a welding line for a second tab member according to one or more embodiments of the present disclosure.

Referring to FIGS. 21 to 23, the second terminal plate 800 and the second sub plate 700 of the present embodiment may be integrated by a second welding line 815.

The second terminal plate 800 may include a second connecting portion 810 that bends toward the second sub plate 700, and the second sub plate 700 and the second connecting portion 810 may be integrated by the second welding line 815.

A second connecting groove portion 701 in which the second connecting portion 810 is seated may be formed in the second sub plate 700. Since the second connecting groove portion 701 may accommodate the second connecting portion 810 having a certain length and thickness, the second sub plate 700 and the second terminal plate 800 may be coupled without a step.

In this way, the second welding line 815 may be formed in a state in which the second connecting portion 810 of the second terminal plate 800 is accommodated in the second connecting groove portion 701 of the second sub plate 700 to integrate the second sub plate 700 and the second terminal plate 800.

The second welding line 815 may be disposed parallel with the second sub welding line 725. The second welding line 815 may be formed by curing a mixture of the second sub plate 700 and the second terminal plate 800 which are melted by heat generated during laser welding.

The second direct connecting portion 850 may increase the current path to improve performance of the secondary battery 2.

In one example, the second direct connecting portion 850 may be formed in the second sub plate 700 and function as a component that allows the second terminal plate 800 and the second tab member 302 to be directly welded.

The second tab member 302 may include the upper tab 350 and the lower tab 360, and a second direct connecting portion 850 may correspond to the upper tab 350. In addition, the upper tab 350 may be formed with a longer length in the third direction than the lower tab 360.

This structural feature is due to more current flowing through the upper tab 350. That is, in the case of the upper tab 350 and the lower tab 360, since 70% or more of the current is transmitted through the upper tab 350 to the terminal, the current path may be improved, and heat generation can be prevented by making the upper tab 350 wider than the lower tab 360.

An upper end portion of the upper tab 350 is in contact with the second connecting portion 810, and the second direct connecting portion 850 may be formed in an upper end of the second sub plate 700 to form a through hole through which the second connecting portion 810 is exposed.

In addition, the upper tab 350 and the second connecting portion 810 may be connected by a second reinforcement welding line 860.

The second reinforcement welding line 860 may be electrically connected to the second connecting portion 810 of the second terminal plate 800 exposed through the second direct connecting portion 850 and the upper tab 350 in contact with the second connecting portion 810.

The second reinforcement welding line 860 may be disposed parallel with the second welding line 815. The second direct connecting portion 850 may have a shape of a straight line extending in the second direction in the second sub plate 700, and the second reinforcement welding line 860 may be formed along the second direct connecting portion 850.

The second reinforcement welding line 860 may be formed by curing a mixture of the second connecting portion 810 of the second terminal plate 800 and the upper tab 350 which are melted by heat generated during laser welding.

Hereinafter, a method of manufacturing a secondary battery according to one or more embodiments of the present disclosure will be described.

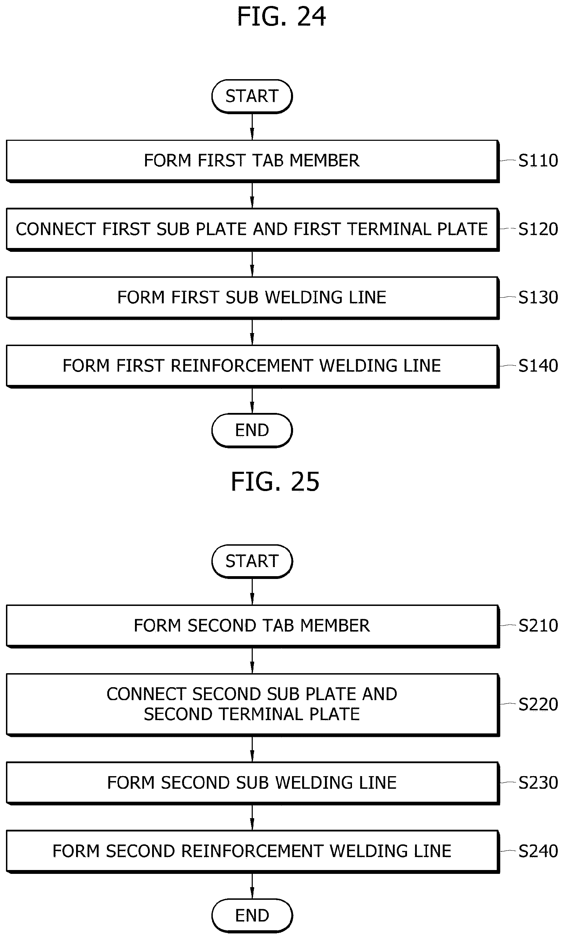

FIG. 24 is a flowchart schematically illustrating operations of connecting a first electrode and a first terminal according to one or more embodiments of the present disclosure.

Referring to FIG. 24, the first tab member 301 is formed on the electrode assembly 200 (S110).

As one example, an operation of forming the first tab member 301 may be performed by cutting or removing a portion of the first uncoated portion 212 of the first electrode 210 by a notching jig or the like.

A first tab 310 may be formed in the remaining area of the first uncoated portion 212, a portion of which is cut by the notching jig or the like.

In this case, the first tab member 301 consists of the upper tab 320 and the lower tab 330, and the upper tab 320 is formed to have a longer length in the third direction than the lower tab 330. This is a configuration corresponding to the first direct connecting portion 650.

After the first tab member 301 is formed, the first sub plate 500 and the first terminal plate 600 are coupled (S120).

The first connecting portion 610 which is bent in a direction opposite to the third direction is formed in one end of the first terminal plate 600, the first connecting portion 610 is seated on the first connecting groove portion 501 formed on the upper end of the first sub plate 500, and the first terminal plate 600 and the first sub plate 500 may be coupled to each other by forming the first reinforcement welding line 615 by laser welding.

Thereafter, the first tab member 301 and the first sub plate 500 are brought into contact with each other. The first sub plate 500 may be disposed to face the first end surface 301a of the first tab member 301 in the first direction.

The first sub plate 500 may be moved toward the first end surface 301a of the first tab member 301 by any of various types of transfer devices (not illustrated) such as grippers, suction devices, etc.

Such movement of the first sub plate 500 may be performed to a point where an inner surface of the first sub plate 500 is in contact with the first end surface 301a of the first tab member 301.

When the first tab member 301 and the first sub plate 500 are in contact with each other, the first sub welding line 525 is formed on the first tab member 301 and the first sub plate 500, and the first tab member 301 and the first sub plate 500 are connected to each other (S130).

Joining of the first tab member 301 and the first sub plate 500 may be performed by a laser welder emitting a laser beam. The laser welder may be a dual beam laser welder that emits a ring beam that acts as a conductor and a center beam that acts as a keyhole.

The laser welder may emit a laser beam from the outside of the first sub plate 500 in a direction opposite to the first direction, i.e., from the first sub plate 500 toward the first tab member 301.

Some regions of the first sub plate 500 and the first tab member 301 may be melted and mixed by the thermal energy of the laser beam and may form the first sub welding line 525.

The first sub plate 500 and the first tab member 301 may be brought into contact as the first sub welding line 525 is cured.

In this case, the first tab member 301 includes the upper tab 320 and the lower tab 330, the upper tab 320 is integrally connected by the first sub welding line 525 to the first extension plate 520 formed on an upper portion of the first center plate 510 of the first sub plate 500, and the lower tab 330 is integrally connected by the first sub welding line 525 to the first extension plate 520 formed on the lower portion of the first center plate 510.

The first sub welding line 525 may be irradiated with a laser beam linearly in the second direction, and the first sub welding line 525 may be formed in the second direction.

After formation of the first sub welding line 525, the first reinforcement welding line 660 is formed in the first terminal plate 600 and the first tab member 301 through the first direct connecting portion 650 formed in the first sub plate 500 (S140).

More specifically, the upper tab 320 of the first tab member 301 is electrically connected directly to the first terminal plate 600 through the first direct connecting portion 650 and the first reinforcement welding line 660.

The first direct connecting portion 650 is formed in the upper end of the first sub plate 500 and may be formed to have the shape of a straight line through hole through which the first connecting portion 610 is exposed. Thus, the upper tab 320 and the first terminal plate 600 may be integrally connected through the first direct connecting portion 650 as the first reinforcement welding line 660 is cured.

As illustrated in FIGS. 15 and 16, the first direct connecting portion 650 may be formed in a zigzag shape or a wavy shape. Since the first reinforcement welding line 660 is formed along the shape of the first direct connecting portion 650, a wider welding section can be ensured to reinforce strength.

FIG. 25 is a flowchart schematically illustrating operations of connecting a second electrode and a second terminal according to one or more embodiments of the present disclosure.

Referring to FIG. 25, the second tab member 302 is formed on the electrode assembly 200 (S210).

In one example, an operation of forming the second tab member 302 may be performed by cutting or removing a portion of the second uncoated portion 222 of the second electrode 220 by a notching jig (not illustrated) or the like.

A second tab 340 may be formed in the remaining area of the second uncoated portion 222, a portion of which is cut by the notching jig or the like.

In this case, the second tab member 302 consists of the upper tab 350 and the lower tab 360, and the upper tab 350 is formed to have a longer length in the third direction than the lower tab 360. This is a configuration corresponding to the second direct connecting portion 850.

After the second tab member 302 is formed, the second sub plate 700 and the second terminal plate 800 are coupled (S220).

The second connecting portion 810 which is bent in a direction opposite to the third direction is formed in one end of the second terminal plate 800, the second connecting portion 810 is seated on the second connecting groove portion 701 formed on the upper end of the second sub plate 700, and the second terminal plate 800 and the second sub plate 700 may be coupled to each other by forming the second welding line 815 by laser welding.

Thereafter, the second tab member 302 and the second sub plate 700 are brought into contact with each other. The second sub plate 700 may be disposed to face the second end surface 302a of the second tab member 302 in the first direction.

The second sub plate 700 may be moved toward the second end surface 302a of the second tab member 302 by any of various types of transfer devices such as grippers, suction devices, etc.

Such movement of the second sub plate 700 may be performed to a point where an inner surface of the second sub plate 700 is in contact with the second end surface 302a of the second tab member 302.

When the second tab member 302 and the second sub plate 700 are in contact with each other, the second sub welding line 725 is formed on the second tab member 302 and the second sub plate 700, and the second tab member 302 and the second sub plate 700 are connected to each other (S230).

Joining of the second tab member 302 and the second sub plate 700 may be performed by a laser welder emitting a laser beam. The laser welder may be a dual beam laser welder that emits a ring beam that acts as a conductor and a center beam that acts as a keyhole.

The laser welder may emit a laser beam from the outside of the second sub plate 700 in a direction opposite to the second direction, i.e., from the second sub plate 700 toward the second tab member 302.

Some regions of the second sub plate 700 and the second tab member 302 may be melted and mixed by the thermal energy of the laser beam and may form the second sub welding line 725.

The second sub plate 700 and the second tab member 302 may be brought into contact as the second sub welding line 725 is cured.

In this case, the second tab member 302 includes the upper tab 350 and the lower tab 360, and the upper tab 350 is integrally connected by the second sub welding line 725 to the second extension plate 720 formed on an upper portion of the second center plate 710 of the second sub plate 700, and the lower tab 360 is integrally connected by the second sub welding line 725 to the second extension plate 720 formed on the lower portion of the second center plate 710.

The second sub welding line 725 may be irradiated with a laser beam linearly in the second direction, and the second sub welding line 725 may be formed in the second direction.

After the second sub welding line 725 is formed, the second reinforcement welding line 860 is formed in the second terminal plate 800 and the second tab member 302 through the second direct connecting portion 850 formed in the second sub plate 700 (S240).

More specifically, the upper tab 350 of the second tab member 302 is electrically connected directly to the second terminal plate 800 through the second direct connecting portion 850 and the second reinforcement welding line 860.

The second direct connecting portion 850 is formed in the upper end of the second sub plate 700 and may be formed to have the shape of a straight line through hole through which the second connecting portion 810 is exposed. Thus, the upper tab 350 and the second terminal plate 800 may be integrally connected through the second direct connecting portion 850 as the second reinforcement welding line 860 is cured.

According to an embodiment of the present disclosure, by forming a first direct connecting portion in which a first terminal plate is exposed in a first sub plate, since the first terminal plate and a first tab member are directly connected, the flow of current can be distributed more evenly, thereby reducing heat generation.

Particularly, since the first direct connecting portion corresponds to an upper tab, and allows the current of the upper tab through which a large amount of current flows to flow directly to the first terminal plate, the current flow can be improved.

The present disclosure is directed to providing a secondary battery, a method of manufacturing the secondary battery, and a battery pack capable of distributing a flow of current more evenly to reduce heat generation.

According to the present disclosure, in a structure in which the first tab member is indirectly connected through the first sub plate, the first tab member can be connected to the first terminal plate by the first direct connecting portion, thereby improving the fixing force.

Example embodiments have been disclosed herein, and although specific terms are employed, they are used and are to be interpreted in a generic and descriptive sense only and not for purpose of limitation. In some instances, as would be apparent to one of ordinary skill in the art as of the filing of the present application, features, characteristics, and/or elements described in connection with a particular embodiment may be used singly or in combination with features, characteristics, and/or elements described in connection with other embodiments unless otherwise specifically indicated. Accordingly, it will be understood by those of skill in the art that various changes in form and details may be made without departing from the scope of the present invention as set forth in the following claims.

## Claims

1. A secondary battery (2), comprising:
a case (100);
an electrode assembly (200) inside the case (100);
a cap assembly (400) sealing the case (100), the cap assembly (400) including a first terminal (420) and a second terminal (430);
a first tab member (301) extending in a first direction from the electrode assembly (200);
a first sub plate (500) between the electrode assembly (200) and the case (100), the first sub plate (500) being connected to the first tab member (301);
a first terminal plate (600) connected to the first terminal (420) and the first sub plate (500); and
a first direct connecting portion (650) in the first sub plate (500) to allow the first terminal plate (600) and the first tab member (301) to be directly welded together.

2. The secondary battery (2) as claimed in claim 1, wherein:
the first tab member (301) includes a first end surface (301a) intersecting the first direction, and
the first sub plate (500) is in contact with the first end surface (301a).

3. The secondary battery (2) as claimed in claim 2, wherein the first sub plate (500) is parallel to the first end surface (301a).

4. The secondary battery (2) as claimed in claim 2 or 3, wherein an area of the first sub plate (500) is larger than an area of the first end surface (301a).

5. The secondary battery (2) as claimed in any one of claims 1 to 4, further comprising a first sub welding line (525) on the first sub plate (500) and the first tab member (301), the first sub welding line (525) connecting the first sub plate (500) and the first tab member (301).

6. The secondary battery (2) as claimed in claim 5, wherein:
the first tab member (301) includes a plurality of first tabs (310) in a second direction intersecting the first direction, and
the first sub welding line (525) is parallel to the second direction.

7. The secondary battery (2) as claimed in any one of claims 1 to 6, wherein:
the first tab member (301) includes an upper tab (320) and a lower tab (330), and
the first direct connecting portion (650) corresponds to the upper tab (320).

8. The secondary battery (2) as claimed in claim 7, wherein the upper tab (320, 350) has a longer length in a third direction than the lower tab (330, 360).

9. The secondary battery (2) as claimed in claim 7 or 8, further comprising:
a first connecting portion (610) bending toward the first sub plate (500) of the first terminal plate (600), and
a first welding line (615) connecting the first sub plate (500) and the first connecting portion (610).

10. The secondary battery (2) as claimed in claim 9, wherein a first connecting groove portion (501) in which the first connecting portion (610) is seated is formed in the first sub plate (500).

11. The secondary battery (2) as claimed in claim 9 or 10, wherein:
an upper end portion of the upper tab (320) contacts the first connecting portion (610), and
the first direct connecting portion (650) includes a through hole in an upper end of the first sub plate (500), the first connecting portion (610) being exposed by the through hole.

12. The secondary battery (2) as claimed in any one of claims 9 to 11, further comprising a first reinforcement welding line (660) on the upper tab (320) and the first connecting portion (610), the first reinforcement welding line (660) connecting the upper tab (320, 350) and the first connecting portion (610).

13. The secondary battery (2) as claimed in claim 12, wherein:
the first direct connecting portion (650) is a straight line extending in a second direction in the first sub plate (500), and
the first reinforcement welding line (660) is along the first direct connecting portion (650).

14. The secondary battery (2) as claimed in claim 12 or 13, wherein:
the first direct connecting portion (650) has a zigzag shape extending in a second direction in the first sub plate (500), and
the first reinforcement welding line (660) is along the first direct connecting portion (650).

15. A battery pack, comprising:
a housing (10); and
a plurality of secondary batteries inside the housing (10), wherein each of the plurality of secondary batteries includes:
a case (100),
an electrode assembly (200) inside the case (100),
a cap assembly (400) sealing the case (100), the cap assembly (400) including a first terminal (420) and a second terminal (430),
a first tab member (301) extending in a first direction from the electrode assembly (200),
a first sub plate (500) between the electrode assembly (200) and the case (100), the first sub plate (500) being connected to the first tab member (301),
a first terminal plate (600) connected to the first terminal (420) and the first sub plate (500), and
a first direct connecting portion (650) in the first sub plate (500) to allow the first terminal plate (600) and the first tab member (301) to be directly welded together.
